# EUROPÄISCHE PATENTSCHRIFT

(11) **EP 3 669 507 B1**
(45) Veröffentlichungstag und Bekanntmachung des Hinweises auf die Patenterteilung: **12.03.2025**
(21) Anmeldenummer: 18750427.9
(22) Anmeldetag: 03.08.2018
(51) Int. Cl.: H04W 12/033, H04W 12/02, H04L 9/30, H04L 9/40, H04L 51/58

(54) **GESCHÜTZTE MOBILE NACHRICHTENÜBERTRAGUNG**
SECURE MOBILE MESSAGE TRANSFER
TRANSMISSION SÉCURISÉE DE MESSAGES MOBILES

(30) Priorität: 16.08.2017 DE 102017214269
(43) Veröffentlichungstag der Anmeldung: 24.06.2020
(73) Patentinhaber: Bundesdruckerei GmbH, 10969 Berlin (DE)
(72) Erfinder: BYSZIO-WEGENER, Frank, 16348 Wandlitz (DE)
(74) Vertreter: Richardt Patentanwälte PartG mbB
(86) Internationale Anmeldenummer: PCT/EP2018/071197
(87) Internationale Veröffentlichungsnummer: WO 2019/034454

(56) Entgegenhaltungen:
- WO-A1-01/95558
- WO-A1-99/35784
- WO-A2-2007/006815
- US-A1- 2006 259 761

## Beschreibung

Die Erfindung betrifft ein Verfahren zur mobilen Nachrichtenübertragung über ein Netzwerk. Genauer gesagt, betrifft die Erfindung ein Telekommunikationsverfahren und einen Netzwerkknoten eines Mobilfunknetzes zum geschützten Übertragen einer Nachricht, insbesondere einer E-Mail, von einem Nachrichten-Client eines Mobilfunkgeräts.

Mobilfunkgeräte zum Versenden und Empfangen von Nachrichten mittels Telekommunikationsverfahren sind aus dem modernen Alltag nicht mehr wegzudenken. Hierbei kommt eine Vielzahl unterschiedlicher Geräte, beispielsweise Smartphones oder Tablets mit Funkschnittstellen, zum Einsatz. Mittels entsprechender Mobilfunkgeräte können unterschiedliche Arten von elektronischen Nachrichten über entsprechende Mobilfunknetzwerke versendet und empfangen werden. Die Nutzer dieser Mobilfunkgeräte möchten frei und sicher kommunizieren unabhängig davon, welche Dienstleister bzw. Übertragungswege bei der Nachrichtübertragung beteiligt sind. Zwar sind Programme zum Verschlüsseln und Entschlüsseln von Nachrichten bekannt, diese müssen aber üblicherweise zusätzlich zu den Programmen, welche die Nachrichtenübertragung ermöglichen, implementiert und eingerichtet bzw. an die Systemumgebung des Nutzers angepasst werden. Viele Nutzer sind mit solchen Programmen und ihrer Handhabung jedoch nicht vertraut. Insbesondere sind sie zumeist nicht damit vertraut, wie entsprechende Programme zu konfigurieren sind.

Die US 2006/259761 A1 beschreibt ein modifiziertes PKI-Verschlüsselungsverfahren und -system zur Sicherung von Informationen, welche zwischen einem Sendersystem und einem Empfängersystem übertragen werden. Ein Zwischensystem, das die Informationen zwischen dem Sender- und dem Empfängersystem überträgt, ist so konfiguriert, dass es unverschlüsselte vom Sendersystem gesendete Informationen verschlüsselt. Das Zwischensystem kann von einem Benutzer des Sendersystems so konfiguriert werden, dass unverschlüsselte vom Sendersystem gesendete Informationen verschlüsselt werden, bevor sie an das Empfängersystem geliefert werden, oder dass unverschlüsselte von einem Sendersystem empfangene Informationen verschlüsselt werden, bevor das Zwischensystem die empfangenen Informationen speichert.

Die WO 2007/006815 A2 beschreibt ein Verfahren und ein System zum Übertragen sicherer Nachrichten zu und von einem Mobiltelefon. Es wird ein Verfahren zum Bereitstellen eines verschlüsseltem Nachrichtenaustauschs auf Mobiltelefonen beschrieben, welches unabhängig von SMS-Nachrichtenaustausch ist und für seinen Betrieb keine signifikanten Speichermengen auf dem Mobiltelefon benötigt. Hierzu wird ein geeigneter Verschlüsselungsalgorithmus ausgewählt und anschließend optimiert. Alle Verschlüsselungs- und Entschlüsselungsfunktionen werden auf dem Mobiltelefon ausgeführt, wodurch eine verbesserte Sicherheit bereitgestellt wird, ohne dass externe Verschlüsselungsserver erforderlich sind.

Der Erfindung liegt die Aufgabe zugrunde, eine geschützte mobile Übertragung von elektronischen Nachrichten zu ermöglichen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Telekommunikationsverfahren zum geschützten Übertragen einer Nachricht von einem Nachrichten-Client eines Mobilfunkgeräts, wobei dem Nachrichten-Client ein Nachrichten-Server zugeordnet ist, der ein Protokoll zur Entgegennahme der Nachricht von dem Nachrichten-Client und zum Senden der Nachricht an einen weiteren Nachrichten-Server implementiert, welchem der in der Nachricht angegebenen Nachrichten-Empfänger zugeordnet ist, wobei die Übertragung der Nachricht von dem Nachrichten-Client an den Nachrichten-Server über einen Netzwerkknoten erfolgt, wobei der Netzwerkknoten den Nachrichten-Server gegenüber dem Nachrichten-Client emuliert und wobei der Netzwerkknoten den Nachrichten-Client gegenüber dem Nachrichten-Server emuliert, mit folgenden Schritten:
a) Empfangen der Nachricht von dem Nachrichten-Client durch den Netzwercknoten,
b) Prüfen durch den Netzwerkknoten, ob der zu übertragende Inhalt der Nachricht verschlüsselt ist, und,
c) wenn dies der Fall ist, Senden der Nachricht von dem Netzwerkknoten über den Nachrichten-Server an den in der Nachricht angegebenen Nachrichten-Empfänger, und,
d) wenn dies nicht der Fall ist, Schützen der Nachricht durch den Netzwerkknoten und Senden der geschützten Nachricht an den Nachrichten-Empfänger,
wobei es sich bei dem Netzwerkknoten um einen Knoten eines Mobilfunknetzes handelt.

Eine elektronische Nachricht bezeichnet ein Datenkonstrukt zur elektronischen Datenverarbeitung, welches digital codierte Daten umfasst. Hierbei kann es sich insbesondere um eine elektronische Datei eines beliebigen Dateiformats handeln, wie etwa eine Text-, Tabellen-, Ton-, Bild- und/oder Videodatei. Die Nachricht kann beispielsweise auch von einer Containerdatei oder einem Dateiordner umfasst bzw. Bestandteil eines solchen sein. Ferner kann es sich bei der Nachricht um einen elektronischen Anhang zu einer weiteren Nachricht, wie etwa einem Dateianhang zu einer E-Mail, oder um eine Nachricht mit Anhang handeln. Nach Ausführungsformen kann die elektronische Datei ausführbar oder nicht ausführbar sein.

Beispielsweise wird die Nachricht in Form einer E-Mail, einer Instant-Message (Sofortnachricht), eines Textdokuments, einer Präsentation, einer Tonnachricht, einer Videonachricht, einer Bildnachricht, einer SMS (insbesondere Festnetz-SMS), EMS (insbesondere Festnetz-EMS) oder MMS (insbesondere Festnetz-MMS) versendet bzw. von einem der zuvor genannten Nachrichtentypen umfasst.

Instant Messaging bezeichnet eine Kommunikationsmethode, bei der zwei oder mehr Teilnehmer per digital codierter Text-, Sprach-, Bild- und/oder Videonachrichten miteinander kommunizieren. Dabei löst der Absender die Übermittlung der Nachricht aus, d.h. ein sog. Push-Verfahren findet Anwendung, so dass die Nachrichten möglichst unmittelbar bei dem vorgesehenen Empfänger ankommen.

Ein Mobilfunkgerät bezeichnet ein mobiles, tragbares elektronisches Gerät mit einer Mobilfunkschnittstelle zu einem digitalen zellularen Mobilfunknetz bzw. Mobilfunknetzwerk, welches nach einem Mobilfunkstandard wie zum Beispiel GSM, UMTS, LTE, CDMA oder einem anderen Standard aufgebaut sein kann. Bei der Mobilfunkschnittstelle kann es sich auch um eine WLAN-Funkschnittstelle handeln, wobei eine Funkzelle durch ein WLAN gebildet, beispielsweise nach dem Standard der IEEE-802.11-Familie. Bei dem Mobilfunkgerät kann es sich insbesondere um ein batteriebetriebenes Endgerät, wie zum Beispiel ein sogenanntes Handy, insbesondere ein Smartphone, einen Tablet-, Notebook- oder Laptop-Computer oder auch eine Smartwatch oder Smartglasses handeln.

Unter einem Netzwerk wird hier jedes Übertragungsmedium mit einer Anbindung zur Kommunikation verstanden, insbesondere eine lokale Verbindung oder ein lokales Netzwerk, insbesondere ein PAN (Personal Area Network), LAN (Local Area Network), ein privates Netzwerk, insbesondere ein Intranet, und ein virtuelles privates Netzwerk (Virtual Private Network - VPN). Ein Netzwerk kann vollständig oder teilweise als Mobilfunknetz bzw. Mobilfunknetzwerk konfiguriert sein. Beispielsweise kann ein Computersystem bzw. Mobilfunkgerät eine Mobilfunkschnittstelle zur Anbindung an das Mobilfunknetz aufweisen. Ferner kann es sich um ein öffentliches Netzwerk, wie beispielsweise ein MAN (Metropolitan Area Network), WAN (Wide Area Network), GAN (Global Area Network), oder das Internet handeln. Je nach Ausführungsform kann diese Verbindung auch über ein Mobilfunknetz hergestellt werden.

Ein Netzwerkknoten bezeichnet eine Hardwarekomponente eines Netzwerks, welche zwei oder mehr Übertragungswege bzw. Kommunikationsverbindungen eines Telekommunikationsnetzes miteinander verbindet. Ferner ist ein Netzwerkknoten über das Netzwerk adressierbar. Bei einem kann es sich insbesondere um einen Netzwerkknoten eines Mobilfunknetzes handeln.

Ein Client bzw. eine Clientanwendung bezeichnet ein elektronisches Datenverarbeitungsprogramm, welches auf einem Endgerät eines Netzwerks ausgeführt wird und mit einem Server bzw. einer Serveranwendung eines Zentralrechners des Netzwerks kommuniziert.

Ein Nachrichten-Client bezeichnet ein elektronisches Datenverarbeitungsprogramm, mittels welchem elektronische Nachrichten empfangen, angezeigt bzw. wiedergegeben, erzeugt und versendet werden können. Die entsprechenden Nachrichten empfängt der Nachrichten-Client von einem Nachrichten-Server bzw. sendet sie an den Nachrichten-Server.

Ein Server bzw. eine Serveranwendung bezeichnet ein elektronisches Datenverarbeitungsprogramm, welches auf einem Computer eines Netzwerks ausgeführt wird und Funktionalitäten, wie beispielsweise Dienstprogramme, Daten oder andere Ressourcen, bereitstellt, auf welche ein Client bzw. eine Clientanwendung über das Netzwerk zugreifen kann.

Ein Nachrichten-Server bezeichnet ein elektronisches Datenverarbeitungsprogramm, mittels welchem Nachrichten entgegengenommen, weitergeleitet, bereitgehalten oder versendet werden können.

Ein Emulator bezeichnet eine Programmanwendung, die einen Computer bzw. die von diesem ausgeführte Software nachbildet und es so ermöglicht, diese Software auf einem anderen Computer mit einer anderen Architektur zu verwenden.

Nach Ausführungsformen empfängt der Netzwerkknoten die Nachricht von dem Nachrichten-Client und stellt sicher, dass die Nachricht in geschützter Form an den vorgesehenen Empfänger versandt wird. Hierzu prüft der Netzwerkknoten, ob der Inhalt der Nachricht verschlüsselt ist. Ist der Inhalt der Nachricht verschlüsselt, so wird diese weitergeleitet. Ist der Inhalt der zu übertragenden Nachricht unverschlüsselt, so schützt der Netzwerkknoten die Nachricht und sendet die geschützte Nachricht an den Nachrichtenempfänger.

Ausführungsformen können den Vorteil haben, dass eine geschützte bzw. verschlüsselte Kommunikation vom Nachrichten-Client des Nutzers bis zum Empfänger der Nachricht ermöglicht wird, ohne dass der Nutzer den Nachrichten-Client und/oder zusätzliche Programme in seinem Endgerät zur Verschlüsselung von Nachrichten konfigurieren muss. Durch das vorliegende Verfahren kann insbesondere eine automatisch, beispielweise durch Verschlüsselung, gesicherte Kommunikation ermöglicht werden, ohne dass der kommunizierende Nutzer aktiv werden und die Sicherung steuern muss.

Dienstleister, welche die Nachrichtenübertragung und/oder eine Netzwerkinfrastruktur zu diesem Zwecke als Dienstleistung anbieten, können das entsprechende Verfahren beispielsweise als einen sicheren Mobilfunknetzzugang anbieten, wobei es sich bei dem Netzwerkknoten um einen von dem Dienstleister bereitgestellten Netzwerkknoten des Mobilfunknetzes handelt, der dem Nutzer als Zugang zu dem Mobilfunknetz dient. Hierbei kann der Netzwerkknoten Zertifikate von anderen Netzwerkknoten des Mobilfunknetzes oder eines weiteren mit dem Mobilfunknetz kommunikativ (beispielsweise über ein Gateway) verbundenen Netzwerks auf deren Gültigkeit prüfen. Bei den weiteren Netzwerkknoten handelt es sich beispielsweise um Webserver. Komponentenanbieter können Teilsysteme anbieten, welche als Netzwerkknoten dienen bzw. von einem Netzwerkknoten umfasst werden und das entsprechende Verfahren implementieren.

Nach Ausführungsformen handelt es sich bei Nachricht um eine E-Mail, bei dem Nachrichten-Client um einen E-Mail-Client und bei dem Nachrichten-Server um einen E-Mail-Server. Ausführungsformen können den Vorteil haben, dass sie eine sichere E-Mail-Kommunikation zwischen dem E-Mail-Client des Senders und dem vorgesehenen Empfänger der E-Mail sicherstellen.

Nach Ausführungsformen handelt es sich bei Nachricht um eine Instant Message, bei dem Nachrichten-Client um einen Instant-Messaging-Client und bei dem Nachrichten-Server um einen Instant-Messaging-Server. Ausführungsformen können den Vorteil haben, dass sie einen sicheren Austausch von Sofortnachrichten bzw. Instant Messages ermöglichen.

Nach Ausführungsformen handelt es sich bei dem Netzwerkknoten um einen der folgenden Knoten: Basisstation, BTS-Knoten, BSC-Knoten, Node-B, STP-Knoten, MSC-Knoten, SMSC-Knoten, PCU-Knoten, SGS-Knoten, GGS-Knoten, RNC-Knoten, CBC-Knoten, Mobilfunkrouter, SGW-Knoten, PGW-Knoten, MME-Knoten. Ausführungsformen können den Vorteil haben, dass eine automatisierte Sicherung, insbesondere Verschlüsselung, von Nachrichten in die Nachrichtenübertragung mittels eines Mobilfunknetzes integriert werden kann.

Basisstation bezeichnet eine ortsfeste Übertragungseinrichtung für Funksignale des Mobilfunknetzes bzw. drahtlosen Netzwerks. Beispielsweise im Falle eines GSM-Netzes (Global System for Mobile Communications) bezeichnet ein BTS-Knoten (Base Transceiver Station) eine Basissendeempfängerstation, welche auch als GSM-Basisstation bezeichnet wird. Ein BTS-Knoten ist ein Netzelement in einem Base Station Subsystem des digitalen GSM-Mobilfunknetzes. Er bedient über die an ihn angeschlossenen Antennen eine oder mehrere Funkzellen des Mobilfunknetzes und ist mit einem BSC-Knoten (Base Station Controller) kommunikativ verbunden. Ein BSC-Knoten ist eine zentrale Steuerungseinheit eines Base Station Subsystems des digitalen GSM-Mobilfunknetzes, welche Funkverbindungen überwacht und ggf. Zellwechsel einleitet.

Ein Node-B ist eine Basisstation in einem UMTS-Mobilfunknetz, welcher mehrere UMTS-Zellen bedient. Der Node B wird von einem RCN-Knoten gesteuert. Node B und RNC-Knoten bilden zusammen ein UMTS Terrestrial Radio Access Network, d.h. ein hierarchisch aufgebautes Funkzugangsnetz zu einem Mobilfunknetz nach UMTS-Standard. Ein RNC-Knoten ist eine Funknetzwerk-Steuereinrichtung, welche die angeschlossenen Node-Bs und deren Funkressourcen verwaltet.

STP-Knoten (Signalling Transfer Point) bezeichnen zentrale Vermittlungsknoten für Signalisierungsverkehr, d.h. im Teilnetz für den Signalisierungsverkehr eines Mobilfunknetzes.

MSC-Knoten (Mobile-services Switching Centre) bezeichnen volldigitale Vermittlungsstelle in einem Mobilfunknetz, wie dem GSM-, UMTS- oder LTE-Mobilfunknetz. Ein SMSC-Knoten (Short Message Service Centre) ist ein Bestandteil eines GSM-, UMTS- oder LTE-Mobilfunknetzes und für die Speicherung, Weiterleitung, Konversion und die Auslieferung von Nachrichten eines Short Message Service zuständig.

PCU-Knoten (Packet Control Unit) steuert die Kommunikation eines GS-Knoten GPRS Support Node), d.h. SGS-Knoten oder GGS-Knoten) mit dem mobilen Endgerät über eine Basisstation. SGS-Knoten (Serving GPRS Support) verwaltet den GPRS-Datenverkehr, d.h. den Datenverkehr des allgemeinen paketorientierten Funkdiensts bzw. des paketorientierten Diensts zur Datenübertragung in einem GSM-Netz. Ein SGS-Knoten organisiert das Einbuchen von Teilnehmern für GPRS-Dienste, den Wechsel von Funkzellen und SGSN-Bereichen und das Routing von GPRS-Daten. GGS-Knoten (Gateway GPRS Support) stellen die GPRS-Datenverbindungen zu netzinternen Dienstplattformen oder zu Datennetzen her.

CBC-Knoten (Cell Broadcast Centre) stellt einen Mobilfunkdienst zum Versenden von Kurzmitteilungen bereit, welche von der Basisstation an alle Geräte geschickt, die diesen Dienst aktiviert haben und sich in derselben Funkzelle befinden.

Ein Mobilfunkrouter stellt einen mobilen Zugang zum Internet für ein oder mehrere internetfähige Endgeräte über ein Mobilfunknetz bereit.

SGW-Knoten (Serving-Gateway) stellen die Funktionalität eines Routers bereit und leiten Pakete zwischen Netzwerken weiter. PGW-Knoten (Packet Data Network Gateway) bilden Schnittstellen zu Datennetzwerken, wie dem Internet. Ein PGW-Knoten verwaltet die Kommunikation bei Verbindungen eines Endgeräts zu mehreren Netzwerken und vergibt IP-Adressen. MME-Knoten (Management Mobility Entity) sind Netzwerkkomponenten des LTE-Mobilfunkstandards, welche eine Paging-Funktionen und ein Signalisierung für Kontrollzwecke bereitstellen.

Ferner kann es sich bei dem Netzwerkknoten im Falle eines satellitengestützten Mobilfunknetzes auch um einen Satelliten handeln.

Nach Ausführungsformen erfolgt die Übertragung der Nachricht von dem Nachrichten-Client an den Netzwerkknoten mittels eines Transport-Layer-Security-Protokolls. Ausführungsformen können den Vorteil haben, dass durch die Verwendung des Transport-Layer-Security-Protokolls eine sichere Kommunikation zwischen dem Nachrichten-Client und dem zugeordneten Netzwerkknoten sichergestellt werden kann.

Nach Ausführungsformen wird der unverschlüsselte Inhalt der Nachricht zum Schutz durch den Netzwerkknoten verschlüsselt, wobei es sich bei der geschützten Nachricht um die durch den Netzwerkknoten verschlüsselte Nachricht handelt und die durch den Netzwerkknoten verschlüsselte Nachricht über den Nachrichten-Server an Nachrichten-Empfänger gesendet wird.

Ausführungsformen können den Vorteil haben, dass der Inhalt der Nachricht von dem Netzwerkknoten selbständig verschlüsselt wird und somit sichergestellt werden kann, dass von dem Netzwerkknoten nur verschlüsselte Nachrichten weitergesendet werden. Durch diese Verschlüsselung kann sichergestellt werden, dass die Nachrichten gegen unerlaubte Zugriffe effektiv geschützt sind. Zur Verschlüsselung kann beispielsweise eine symmetrisches, ein asymmetrisches und/oder ein hybrides Verschlüsselungsverfahren verwendet werden.

Nach Ausführungsformen erfolgt die Verschlüsselung der Nachricht mit Hilfe eines öffentlichen Schlüssels des in der Nachricht angegebenen Nachrichten-Empfängers.

Bei dem öffentlichen Schlüssel kann es sich um einen öffentlichen Schlüssel eines kryptographischen Schlüsselpaars handeln, welches neben dem öffentlichen Schlüssel noch einen zugeordneten privaten Schlüssel umfasst. Der öffentliche Schlüssel kann beispielsweise von einem Zertifikat des Nachrichtenempfängers umfasst und durch diese bereitgestellt werden. Das Zertifikat bestätigt beispielsweise die Authentizität des öffentlichen Schlüssels und dessen Zuordnung zu dem Nachrichtenempfänger.

Unter einem Zertifikat wird hier ein digitales Zertifikat verstanden, welches auch als Public-Key-Zertifikat bezeichnet wird. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhaltet und signiert sein. Alternativ sind auch Zertifikate basierend auf zero-knowledge Kryptosystemen möglich. Beispielsweise kann das Zertifikat dem Standard X.509 oder einem anderen Standard entsprechen.

Digitale Zertifikate sind bei der Absicherung elektronischer Kommunikation durch asymmetrische kryptographische Verfahren ein bewährtes Mittel um Berechtigungen nachzuweisen und durch eine unabhängige, glaubwürdige Instanz (Zertifizierungsdienstanbieter/ZDA), im Allgemeinen die das Zertifikat zuteilende Zertifizierungsstelle, bestätigt. Zertifikate werden in der Regel einem breiten Personenkreis zur Verfügung gestellt um diesem beispielsweise einen öffentlichen Schlüssel zur verschlüsselten Kommunikation zur Verfügung zu stellen.

Ausführungsformen können den Vorteil haben, dass durch die Verwendung des öffentlichen Schlüssels des Nachrichtenempfängers allein dieser, welcher im Besitz des zugehörigen privaten Schlüssels ist, in der Lage ist, die entsprechende Nachricht zu entschlüsseln. Somit kann gewährleistet werden, dass die Nachricht, unabhängig von den Zwischenstationen ihrer Übertragung zum Empfänger hin, allein von dem vorgesehenen Empfänger gelesen werden kann. Dies ist insbesondere vorteilhaft, da die verschlüsselte Übertragung von dem Netzwerkknoten ab somit unabhängig von den Zwischenstationen des Übertragungswegs erfolgt.

Nach Ausführungsformen umfasst der Netzwerkknoten einen Speicher, in welchem der öffentliche Schlüssel des Nachrichten-Empfängers gespeichert ist. Ausführungsformen können den Vorteil haben, dass der Netzwerkknoten direkt auf den öffentlichen Schlüssel des Nachrichten-Empfängers zugreifen kann. Dies kann insbesondere von Vorteil sein, wenn eine Vielzahl von Nachrichten an denselben Nachrichten-Empfänger versendet werden. Beispielsweise wird der öffentliche Schlüssel nach einer erstmaligen Verwendung in dem Speicher für zukünftige weitere Verwendungen hinterlegt.

Nach Ausführungsformen fragt der Netzwerkknoten den öffentlichen Schlüssel mithilfe des in der Nachricht angegebenen Nachrichten-Empfängers von einem Verzeichnis-Server ab. Ausführungsformen können den Vorteil haben, dass der Netzwerkknoten unter Rückgriff auf den Verzeichnisserver verschlüsselte Nachrichten an eine Vielzahl von unterschiedlichen Empfängern mit jeweils individuellen öffentlichen Schlüsseln verschlüsseln kann. Insbesondere benötigt der Netzwerkknoten somit keine Speicherkapazitäten zum Hinterlegen einer Vielzahl von öffentlichen Schlüsseln für eine Vielzahl von möglichen Empfängern. Ferner ermöglicht es der Verzeichnisserver auf zuverlässige Weise, öffentliche Schlüssel für Empfänger bereitzustellen, für welche der Netzwerkknoten keinen öffentlichen Schlüssel umfasst. Dies gilt insbesondere für neue Empfänger, an welche erstmals eine Nachricht versendet werden soll.

Der öffentliche Schlüssel wird beispielsweise als Bestandteil eines entsprechenden Zertifikats des Empfängers der Nachricht bereitgestellt. Bei dem Verzeichnisserver, welcher den öffentlichen Schlüssel bereitstellt, kann es sich beispielsweise um den Nachrichtenserver handeln, welcher dem Nachrichten-Client zugeordnet ist, um einen Nachrichtenserver des Nachrichtendienstleisters oder um einen Verzeichnis-server eines Vertrauensdienstleisters, d.h. eine Certification Authority, handeln, welche auf Nachfrage entsprechende Zertifikate bereitstellt. Die Anfrage des Zertifikats kann beispielsweise mittels LDAP erfolgen.

Nach Ausführungsformen umfasst das Schützen der Nachricht ein Generieren eines Links durch den Netzwerkknoten, über welchen der Inhalt der Nachricht durch den Nachrichten-Empfänger abrufbar ist, wobei eine weitere Nachricht, die den Link beinhaltet, von dem Netzwerkknoten generierter und über den Nachrichten-Server an den Empfänger der geschützten Nachricht gesendet wird, wobei das Senden der geschützten Nachricht in Form eines Abrufens des Inhalts der Nachricht durch den Nachrichten-Empfänger über den Link erfolgt.

Bei einem Link handelt es sich um einen Identifikator einer Speicheradresse unter welcher die Nachricht zum Abruf bereitgestellt ist, beispielsweise einen Hyperlink.

Ausführungsformen können den Vorteil haben, dass eine geschützte Übertragung der Nachricht selbst dann sichergestellt werden kann, wenn der Netzwerkknoten über keinen kryptographischen Schlüssel zum Verschlüsseln der Nachricht verfügt, insbesondere wenn der Netzwerkknoten nicht über den öffentlichen Schlüssel des Empfängers verfügt und diesen auch nicht durch Abruf von beispielsweise einem Verzeichnisserver erlangen kann. Vielmehr wird die entsprechende Nachricht zum Abruf durch den vorgesehenen Nachrichtenempfänger unter einem entsprechenden Link, d.h. einer entsprechenden Netzwerkadresse, bereitgestellt. Der vorgesehene Empfänger wird über diese Bereitstellung mittels einer entsprechenden Nachricht informiert, welche der Netzwerkknoten generiert und an den Empfänger sendet. Ruft der vorgesehene Empfänger die bereitgestellte Nachricht unter dem angegebenen Link ab, so wird diese an den Empfänger übersendet. Beispielsweise muss der Empfänger zum Abrufen der Nachricht ein Zertifikat mit einem ihm zugeordneten öffentlichen Schlüssel bereitstellen, damit die abgerufene Nachricht im Zuge des Abrufs mit dem öffentlichen Schlüssel verschlüsselt werden kann. Nach weiteren Ausführungsformen setzt ein Abrufen der Nachricht durch den vorgesehenen Empfänger eine erfolgreiche Authentifizierung derselben voraus. Eine entsprechende Authentifizierung kann beispielsweise über eine Angabe eines registrierten Benutzernamens und/oder Passworts erfolgen, welche dem vorgesehenen Empfänger zugeordnet sind.

Nach Ausführungsformen setzt das erfolgreiche Abrufen der Inhalte der Nachricht eine erfolgreiche Authentifizierung des abrufenden Nachrichten-Empfängers durch einen Server, welcher den Inhalt der Nachricht unter dem Link zum Abruf bereitstellt, voraus. Ausführungsformen können den Vorteil haben, dass sichergestellt werden kann, dass tatsächlich der vorgesehene Empfänger die Nachricht abruft. Hierdurch kann beispielsweise eine Man-in-the-middle-Attacke, durch welche ein unberechtigter Zugriff die Nachricht erhalten hat, welche über die Bereitstellung der ursprünglichen Nachricht unter dem entsprechenden Link informiert, effektiv abgewehrt werden.

Nach Ausführungsformen erfolgt das Abrufen des Inhalts der Nachricht über einen Ende-zu-Ende-verschlüsselten Übertragungskanal zwischen dem Server, welcher den Inhalt der Nachricht unter dem Link zum Abruf bereitstellt, und einem Computersystem des Nachrichten-Empfängers. Ausführungsformen können den Vorteil haben, dass eine sichere Übertragung der unter dem Link bereitgestellten Nachricht an den vorgesehenen Empfänger gewährleistet werden kann, welcher die Nachricht unter dem entsprechenden Link abruft.

Nach Ausführungsformenhandelt es sich bei dem Server, welcher den Inhalt der Nachricht unter dem Link zum Abruf bereitstellt, um den Netzwerkknoten.

Nach Ausführungsformen handelt es sich bei dem Server, welcher den Inhalt der Nachricht unter dem Link zum Abruf bereitstellt, um einen Download-Server eines Dienstanbieters, an welchen der Netzwerkknoten den Inhalt der Nachricht zum Abrufen sendet.

Nach Ausführungsformen wird der Inhalt der Nachricht über eine verschlüsselte Kommunikationsverbindung an den Server des Dienstanbieters gesendet. Ausführungsformen können den Vorteil haben, dass der Netzwerkknoten über einen kryptographischen Schlüssel zum Verschlüsseln und Kommunizieren mit dem Server des Dienstanbieters verfügt. Beispielsweise kann der Netzwerkknoten ein vorkonfiguriertes Programm zur verschlüsselten Kommunikation mit dem Server des Dienstanbieters umfassen.

Ausführungsformen umfassen ferner einen Netzwerkknoten zum geschützten Übertragen einer Nachricht von einem Nachrichten-Client eines Mobilfunkgeräts, wobei der Netzwerkknoten einen Prozessor, einen Speicher mit Programminstruktionen und eine Netzwerkschnittstelle umfasst,
wobei ein Ausführen der Programminstruktionen durch den Prozessor den Netzwerkknoten dazu veranlasst einen Nachrichten-Server gegenüber dem Nachrichten-Client zu emulieren und den Nachrichten-Client gegenüber dem Nachrichten-Server zu emulieren,
wobei der Nachrichten-Client dem Nachrichten-Server zugeordnet ist, der ein Protokoll zur Entgegennahme der Nachricht von dem Nachrichten-Client und zum Senden der Nachricht an einen weiteren Nachrichten-Server implementiert, welchem der in der Nachricht angegebenen Nachrichten-Empfänger zugeordnet ist,
wobei ein Ausführen der Programminstruktionen durch den Prozessor den Netzwerkknoten ferner veranlasst zum:
   a) Empfangen der Nachricht von dem Nachrichten-Client,
   b) Prüfen, ob der zu übertragende Inhalt der Nachricht verschlüsselt ist, und,
   c) wenn dies der Fall ist, Senden der Nachricht über den Nachrichten-Server an den in der Nachricht angegebenen Nachrichten-Empfänger, und,
   d) wenn dies nicht der Fall ist, Schützen der Nachricht durch den Netzwerkknoten und Senden der geschützten Nachricht an den Nachrichten-Empfänger,
wobei es sich bei dem Netzwerkknoten um einen Knoten eines Mobilfunknetzes handelt.

Nach Ausführungsformen ist Netzwerkknoten dazu konfiguriert eine oder mehrere der zuvor genannten Ausführungsformen des Verfahrens zum geschützten Übertragen einer Nachricht von einem Nachrichten-Client eines Mobilfunkgeräts auszuführen.

Nach Ausführungsformen handelt es sich bei dem Netzwerkknoten um einen der folgenden Knoten: Basisstation, BTS-Knoten, BSC-Knoten, Node-B, STP-Knoten, MSC-Knoten, SMSC-Knoten, PCU-Knoten, SGS-Knoten, GGS-Knoten, RNC-Knoten, CBC-Knoten, Mobilfunkrouter, SGW-Knoten, PGW-Knoten, MME-Knoten.

Unter einem Computersystem wird hier ein Gerät verstanden, welches mittels programmierbarer Rechenvorschriften unter Verwendung elektronischer Schaltkreise Daten verarbeitet. Unter einem Programm, einer Programmanwendung bzw. Programminstruktionen wird hier ohne Einschränkung jede Art von Computerprogramm verstanden, welches maschinenlesbare Instruktionen zur Steuerung einer Funktionalität des Computers umfasst.

Ein Computersystem kann eine Kommunikationsschnittstelle zur Verbindung mit dem Netzwerk umfassen, wobei es sich bei dem Netzwerk um ein Kommunikationsnetz, insbesondere ein Mobilfunknetz, handeln kann. Bei einem Computersystem kann es sich beispielsweise um ein mobiles Telekommunikationsgerät, insbesondere ein Smartphone, einen tragbaren Computer, wie zum Beispiel einen Laptop oder Palmtop-Computer, einen Personal Digital Assistant oder dergleichen handeln. Ferner kann es sich um beispielsweise um eine Smartwatch oder Smartglasses handeln. Zudem kann es sich um ein stationäres Computersystem, wie beispielsweise einen Personal Computer oder einen in einer Client-Server-Umgebung eingebundenen Client oder Server handeln.

Unter einem Speicher bzw. Datenspeicher werden hier sowohl flüchtige als auch nicht flüchtige elektronische Speicher bzw. digitale Speichermedien verstanden.

Unter einem nichtflüchtigen Speicher wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem flüchtigen elektronischen Speicher wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem Prozessor wird eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem Prozessor ein Mikroprozessor oder ein Mikroprozessorsystem aus mehreren Prozessorkernen und/oder mehreren Mikroprozessoren verstanden.

Unter einer Kommunikationsschnittstelle wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist. Unter einer Kommunikationsschnittstelle zur drahtlosen Kommunikation wird eine Kommunikationsschnittstelle verstanden, welche zum kontaktlosen Senden und Empfangen von Daten konfiguriert ist.

Im Weiteren werden Ausführungsformen der Erfindung mit Bezugnahme auf die Zeichnungen näher erläutert. Es zeigen:
- Figur 1: ein schematisches Blockdiagramm einer ersten exemplarischen Ausführungsformen eines Netzwerks zur gesicherten Nachrichtenübertragung,
- Figur 2: ein schematisches Blockdiagramm einer zweiten exemplarischen Ausführungsformen eines Netzwerks zur gesicherten Nachrichtenübertragung,
- Figur 3: ein schematisches Blockdiagramm einer dritten exemplarischen Ausführungsformen eines Netzwerks zur gesicherten Nachrichtenübertragung,
- Figur 4: ein schematisches Blockdiagramm einer vierten exemplarischen Ausführungsformen eines Netzwerks zur gesicherten Nachrichtenübertragung,
- Figur 5: ein schematisches Flussdiagramm einer ersten exemplarischen Ausführungsformen eines Verfahrens zur gesicherten Nachrichtenübertragung,
- Figur 6: ein weiteres schematisches Flussdiagramm der ersten exemplarischen Ausführungsformen eines Verfahrens zur gesicherten Nachrichtenübertragung,
- Figur 7: ein schematisches Flussdiagramm einer zweiten exemplarischen Ausführungsformen eines Verfahrens zur gesicherten Nachrichtenübertragung und
- Figur 8: ein weiteres schematisches Flussdiagramm der zweiten exemplarischen Ausführungsformen eines Verfahrens zur gesicherten Nachrichtenübertragung.

Elemente der nachfolgenden Ausführungsformen, die einander entsprechen, werden mit denselben Bezugszeichen gekennzeichnet.

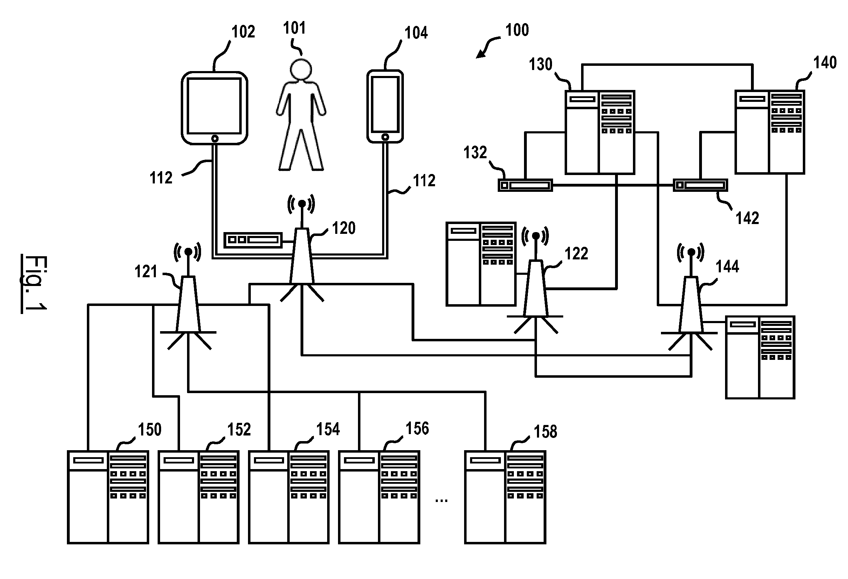

Figur 1 zeigt eine Ausführungsform eines exemplarischen Netzwerks 100 zur gesicherten mobilen Nachrichtenübertragung. Bei diesem Netzwerk 100 oder zumindest einem Teil dieses Netzwerks handelt es sich um ein digitales zellulares Funknetzwerk, z.B. ein Mobilfunknetzwerk. Das Netzwerk 100 kann ein oder mehrere mobile Endgeräte 102, 104 eines Nutzers 101 umfassen, bei welchen es sich um mobile, tragbare Kommunikationsgeräte, d.h. Mobilfunkgeräte handelt. Beispielsweise handelt es sich um ein Tablet 102 und ein Smartphone 104, welche jeweils eine Mobilfunkschnittstelle zu einem digitalen zellularen Mobilfunknetzwerk umfassen. Ferner können mögliche mobile Endgeräte, sofern diese eine Mobilfunkschnittstelle zu einem digitalen zellularen Mobilfunknetzwerk umfassen, beispielsweise ausgebildet sein als: Smart Devices, wie etwa Smartglasses oder Smartwatches, Laptops, Phablets, Personal Digital Assistant (PDA), Mobil Digital Assistants (MDA). Die mobilen Endgeräte 102, 104 können jeweils ein Nachrichten-Client-Programm umfassen, d.h. als Nachrichten-Clients konfiguriert sein. Beispielsweise sind die mobilen Endgeräte 102, 104 jeweils als E-Mail-Clients konfiguriert. Ferner oder alternativ können sie als Instant-Messaging-Clients konfiguriert sein. Die mobilen Endgeräte 102, 104 sind beispielsweise jeweils über eine kabel- bzw. drahtlose verschlüsselte Kommunikationsverbindung 112 kommunikativ mit einem Netzwerkknoten 120 eines Mobilfunknetzes verbunden. Bei dem Mobilfunknetz kann es sich beispielsweise um ein Mobilfunknetz gemäß dem GSM-, UMTS- oder LTE-Standard handeln. Bei dem Netzwerkknoten 120 kann es sich beispielsweise handeln um: eine Basisstation, einen BTS-Knoten, einen BSC-Knoten, einen Node-B, einen STP-Knoten, einen MSC-Knoten, einen SMSC-Knoten, einen PCU-Knoten, einen SGS-Knoten, einen GGS-Knoten, einen RNC-Knoten, einen CBC-Knoten, einen Mobilfunkrouter, einen SGW-Knoten, einen PGW-Knoten, einen MME-Knoten. Die Verschlüsselung kann als eine symmetrische, asymmetrische und/oder hybriden kryptographische Verschlüsselung implementiert sein.

Das Netzwerk 100 kann nach Ausführungsformen einen Netzwerkknoten umfassen, welcher sich in einer Sicherheitsdomäne der Nachrichten-Clients 102, 104 befindet, beispielsweise den Netzwerkknoten 120. Die Sicherheitsdomäne ist nach Ausführungsformen dadurch gekennzeichnet, dass die Kommunikationsverbindungen 112 zwischen den Nachrichten-Clients 102, 104 und dem Netzwerkknoten 120 verschlüsselt, beispielsweise mittels einer Ende-zu-Ende-Verschlüsselung, und somit gegen eine Man-in-the-Middle-Attacke gesichert sind.

Das weiterer (Teil-)Netzwerk umfasst ein oder mehrere Server 150-158, welche als Nachrichten-Server konfiguriert sein können. Bei diesen handelt es sich beispielsweise um ein oder mehrere Webserver, d.h. Server, welche Dokumente an Clients wie z. B. Webbrowser übertragen. Als Webserver werden hier Computersysteme bezeichnet, welche eine Webserver-Software umfassen und Dokumente über das Netzwerk 100 zur Verfügung stellen. Ferner können die Server 150-158 beispielsweise ein oder mehrere FTP-Server, WebDAV-Server und/oder X-Server umfassen. FTP-Server stellen Dateien zur Übertragung mittels FTP- Protokoll (File Transfer Protocol) bereit. WebDAV-Server stellen basierend auf dem WebDAV- Standard (Web-based Distributed Authoring and Versioning) Dateien zur Übertragung im Internet bereit. X-Server stellen (grafische) Dienste unter Verwendung des Netzwerkprotokolls des X Window Systems zur Verfügung.

Das Netzwerk 100 umfasst ferner ein oder mehrere Vermittlungsstellen 121, 122, 144 für Zertifikate und/oder öffentliche Schlüssel. Die Vermittlungsstellen 122, 144 umfassen beispielsweise jeweils einen Verzeichnisserver, welcher ein Verzeichnis mit Zertifikaten und/oder öffentlichen Schlüssel bereitstellt, aus dem entsprechende Zertifikate und/oder öffentliche Schlüssel abgefragt werden können. Bei den Verzeichnisservern handelt es sich beispielsweise LDAP-Server (Lightweight Directory Access Protocol Server), welche ein LDAP-Netzwerkprotokoll zur Abfrage und Änderung von Informationen verteilter Verzeichnisdienste bereitstellt. Aus dem von den LDAP-Servern bereitgestellten Verzeichnis können objektbezogene Daten, wie zum Beispiel Zertifikate und/oder öffentliche Schlüssel von Nachrichten-Empfängern, abgefragt werden.

Zudem umfasst das Netzwerk 100 zumindest einen ersten Nachrichten-Server 130, welcher den durch die mobilen Endgeräte 102, 104 bereitgestellten Nachrichten-Clients zugeordnet ist. Ferner umfasst das Netzwerk zumindest einen zweiten Nachrichten-Server 140, welcher dem Empfänger einer von einem der Nachrichten-Clients 102, 104 gesendeten Nachricht zugeordnet ist. Die beiden Nachrichten-Server 130, 140 umfassen beispielsweise jeweils ein Nachrichten-Gateway 132, 142, über welche eine Verbindung zwischen einem dem Sender der Nachricht zugeordneten (Teil-)Netzwerk und einem dem Empfänger der Nachricht zugeordneten (Teil-)Netzwerk hergestellt wird. Die Nachrichten-Server 130, 140 werden beispielsweise in Form von Computern bereitgestellt, welche jeweils ein Nachrichten-Serverprogramm ausführen. Beispielsweise sind sie als E-Mail-Server und/oder Instant-Messaging-Server konfiguriert.

Bei den Nachrichten-Server 130, 140 kann es sich nach weiteren Ausführungsformen auch um Web-Server, FTP-Server, WebDAV-Server und/oder X-Server handeln, welche eine Nachricht bzw. Datei übertragen bzw. weiterleiten.

Eine von einem der mobilen Endgeräte 102, 104 erzeugte und an einen dem Nachrichten-Server 140 zugeordneten Empfänger versandte Nachricht, beispielsweise eine E-Mail, Instant-Message oder sonstige Datei, wird von dem Netzwerkknoten 120 über die Vermittlungsstelle 122, den Nachrichten-Server 130, das Nachrichten-Gateway 132, das Nachrichten-Gateway 142 an den Nachrichten-Server 140 übertragen. Damit ist die Nachricht im Einflussbereich des Empfängers und kann von diesem weiterverarbeitet werden.

Die Übertragung von Nachricht von den Nachrichten-Clients 102, 104 an den Nachrichten-Server 130 erfolgt über ein oder mehrere Netzwerkknoten 120, 122, wobei zumindest einer der Netzwerkknoten 120, 122 den Nachrichten-Server 130 gegenüber den Nachrichten-Clients 102, 104 und die Nachrichten-Clients 102, 104 gegenüber dem Nachrichten-Server 130 emuliert.

Ein oder mehrere der Netzwerkknoten 120, 122 sind dazu konfiguriert sicherzustellen, dass nur gesicherte Nachrichten an den vorgesehenen Empfänger übersandt werden. Beispielsweise werden die Nachrichten von dem Netzwerkknoten 120, 122 automatisch verschlüsselt, falls sie unverschlüsselte Inhalte umfassen. Hierzu wird beispielsweise ein öffentlicher Schlüssel des oder der vorgesehenen Empfänger der entsprechenden Nachricht verwendet. Ein solcher öffentlicher Schlüssel und/oder ein Zertifikat mit einem solchen öffentlichen Schlüssel ist beispielsweise in dem Netzwerkknoten 120, 122 gespeichert. Nach Ausführungsformen wird der öffentliche Schlüssel und/oder ein Zertifikat mit einem öffentlichen Schlüssel eines Empfängers dem 120 zusätzlich oder alternativ von der Vermittlungsstelle 122 und/oder einem zugehörigen Verzeichnisserver zum Abruf bereitgestellt. Dieser öffentliche Schlüssel und/oder ein Zertifikat mit diesem öffentlichen Schlüssel empfängt die Vermittlungsstelle 122 beispielsweise von den Nachrichten-Server 130, welcher den Nachrichten-Clients der mobilen Endgeräte 102, 104 zugeordnet ist, oder von einem weiteren Vermittlungsstelle 144 mit einem zugeordneten Verzeichnis-Server. Der Nachrichten-Server 130 fragt den öffentlichen Schlüssel und/oder das Zertifikat mit dem öffentlichen Schlüssel beispielsweise von dem Nachrichten-Server 140 ab, welcher dem Empfänger der Nachricht zugeordnet ist, oder von der Vermittlungsstelle 144. Die Vermittlungsstelle 144 fragt den öffentlichen Schlüssel und/oder das Zertifikat mit dem öffentlichen Schlüssel beispielsweise von dem Nachrichten-Server 140 ab.

Verschiedene Komponenten und/oder Teilsysteme des Netzwerks 100 können unabhängig voneinander eine automaische Ver- und Entschlüsselung der übertragenen Nachrichten übernehmen. Beispielweise kann der Netzwerkknoten 120 durch entsprechende Erweiterungen zur automatischen Ver- und Entschlüsselung von ihm weitergeleiteter Nachrichten konfiguriert sein. Hierzu prüft der Netzwerkknoten 120 beispielsweise, ob zum Versenden der Nachricht ein oder mehrere Ports verwendet werden, welche für einen verschlüsselten Nachrichtenversand, z.B. mittels TLS, vorgesehenen. Falls dies der Fall ist, stellt der Netzwerkknoten 120 ein lokales Zertifikat für eine verschlüsselte Kommunikation mit den mobilen Endgeräten 102, 104 bereit, dessen Vertrauenswürdigkeit vom Nutzer 101 bestätigt ist. Beispielsweise nutzt der Netzwerkknoten 120 ein Zertifikat, welches in einem Vertrauensspeicher, d.h. einem geschützten Speicherbereich, der mobilen Endgeräte 102, 104 bereitgestellt wird. Mittels dieses Zertifikats kann der Netzwerkknoten 120 für die mobilen Endgeräte 102, 104 als TLS-Endpunkt fungieren und von diesen empfangene Nachrichten weiterverarbeiten.

Unter einem geschützten Speicherbereich wird beispielsweise ein Bereich eines elektronischen Speichers verstanden, auf den ein Zugriff, das heißt ein Lesezugriff oder ein Schreibzugriff, nur über einen mit dem Speicher gekoppelten Prozessor möglich ist. Ein entsprechender Zugriff wird beispielsweise nur freigegeben, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln

Der Netzwerkknoten 120 prüft, ob der Inhalt einer zu versendenden Nachricht verschlüsselt ist, etwa mittels PGP oder s/mime. Falls dies der Fall, werden von dem Netzwerkknoten 120 keine zusätzlichen Aktionen zum Sichern bzw. Verschlüsseln der Nachricht ausgeführt. Vielmehr wird die bereits verschlüsselte Nachricht zum Weiterversand an den Nachrichten-Server 130 übertragen. Falls dies jedoch nicht der Fall ist, ermittelt der Netzwerkknoten 120, beispielsweise anhand des in der Nachricht angegebenen Empfängers oder der Zieladresse, welche externen bzw. entfernten Teilsysteme am Empfang der Nachricht beteiligt sein werden. Zum Verschlüsseln der Nachricht ermittelt der Netzwerkknoten 120 ein Zertifikat mit einem öffentlichen kryptographischen Schlüssel, welcher dem Empfänger bzw. der Zieladresse der Nachricht zugeordnet ist. Beispielsweise fragt der Netzwerkknoten 120 ein entsprechendes Zertifikat des Empfängers vom Nachrichten-Server 130 ab. Bei dieser Anfrage kann es sich z.B. um LDAP-Anfrage handeln. Eine Antwort auf die LDAP-Anfrage erhält der Netzwerkknoten 120 beispielsweise von dem Nachrichten-Server 130 oder dem Nachrichten-Gateway132 des Nachrichten-Servers 130. Nach weiteren Ausführungsformen fragt der Netzwerkknoten 120 beispielsweise einen Netzwerk-Provider, etwa einen Internet-Provider, nach dem Zertifikat des Empfängers. Nach weiteren Ausführungsformen fragt der Netzwerkknoten 120 beispielsweise eine Zertifizierungsstelle bzw. einen Zertifikatsdienstleister (engl. certificate authority/certification authority, kurz CA), welcher digitale Zertifikate herausgibt, nach dem Zertifikat des vorgesehenen Empfängers der Nachricht. Die verschlüsselte Nachricht wird über den Nachrichten-Server 130, welcher den Nachrichten-Clients 102, 104 des Nutzers zugeordnet ist, an den vorgesehenen Empfänger bzw. die Zieladresse der Nachricht gesendet.

Liegt dem Netzwerkknoten 120 das Zertifikat des Empfängers der Nachricht vor, verwendet der Netzwerkknoten 120 den von dem entsprechenden Zertifikat bereitgestellten öffentlichen Schlüssel zum Verschlüsseln der zu sendenden Nachricht. Gelingt es dem Netzwerkknoten 120 nicht ein Zertifikat des Empfängers der Nachricht zu ermitteln oder tritt ein Fehler beim Verschlüsseln der Nachricht auf, z.B. weil das ermittelte Zertifikat abgelaufen ist, sendet der Netzwerkknoten 120 beispielsweise eine alternative Nachricht an den vorgesehenen Empfänger der Ursprungsnachricht, welche diesen über den Zustellversuch informiert und/oder einen Link mit einer Downloadmöglichkeit der Ursprungsnachricht umfasst.

Nach alternative Ausführungsformen erfolgt die Verschlüsselung durch einen Netzwerkknoten des Netzwerkproviders, beispielsweise die Vermittlungsstelle 122. Zum Verschlüsseln der Nachricht führt der Nutzwerkknoten des Netzwerkproviders ein Verschlüsselungsverfahren analog zu dem zuvor für den Netzwerkknoten 120 beschriebenen Verschlüsselungsverfahren aus.

Nach alternative Ausführungsformen kann die Verschlüsselung auch durch den Nachrichten-Server 130 des Nachrichtendienst-Providers selbst erfolgen. Nach Ausführungsformen erfolgt die Verschlüsselung durch ein Nachrichten-Gateway 132 des Nachrichten-Servers 130. Zum Verschlüsseln der Nachricht führen der Nachrichten-Server 130 des Nachrichtendienst-Providers oder der Nutzwerkknoten 122 des Netzwerkproviders ein Verschlüsselungsverfahren analog zu dem zuvor für den Netzwerkknoten 120 beschriebenen Verschlüsselungsverfahren aus.

Wird ein ungültiges Zertifikat und/oder ein ungültiger öffentlicher Schlüssel bereitgestellt, kann eine Fehlermeldung gegeben werden. Beispielsweise wird eine Fehlernachricht an den Sender und/oder den Empfänger der Ursprungsnachricht, deren Verschlüsslung fehlgeschlagen ist gesendet, welche die Fehlermeldung umfasst und/oder Fehlerseite aufruft bzw. auf eine Fehlerseite verlinkt, auf welcher eine Nutzerwarnung bereitgestellt wird.

Nach Ausführungsformen kann ein verschlüsselter Kommunikationskanal zwischen den mobilen Endgeräten 102, 104 und dem Netzwerkknoten 120 wie folgt implementiert werden: Beispielsweise werden Programminstruktionen bereitgestellt, deren Ausführung durch einen Prozessor der mobilen Endgeräten 102, 104 betriebssystemweite Einstellungsänderungen oder alternativ Einstellungsänderungen des Nachrichten-Clients, etwa eines E-Mail-Clients, implementieren. Zusätzlich oder alternativ sind beispielsweise ein SIM-Tool-Kit oder Programminstruktionen zum Aktualisierung von SIM-Karteneinstellungen bzw. der Firmware der mobilen Endgeräten 102, 104 vorgesehen. Ein beispielsweise mittels einer SMS empfangenes Zertifikat, welches der Nutzer 101 als vertrauenswürdig anerkennt, und ein dem mobilen Endgeräten 102, 104 bzw. Nutzer 101 zugeordneter privater Schlüssels werden zur Implementierung der verschlüsselten Kommunikationsverbindung verwendet, wobei zuvor beschriebenen Programminstruktionen zum Einsatz kommen können. Nach Ausführungsformen wird bei der Einwahl in einen Einwahlpunkt des Mobilfunknetzes mit einer Zertifikatsauthentifizierung oder einer Nutzung einer schlüssel- bzw. zertifikatsbasierten, paketvermittelten Kommunikationsverbindung, wie etwa TCP/IP, ein lokales Zertifikat übertragen, welches der Nutzer als vertrauenswürdig anerkennen muss. Das empfangene Zertifikat, welches der Nutzer 101 als vertrauenswürdig anerkennt, und ein dem mobilen Endgeräten 102, 104 bzw. Nutzer 101 zugeordneter privater Schlüssels werden zur Implementierung der verschlüsselten Kommunikationsverbindung verwendet, wobei zuvor beschriebenen Programminstruktionen zum Einsatz kommen können.

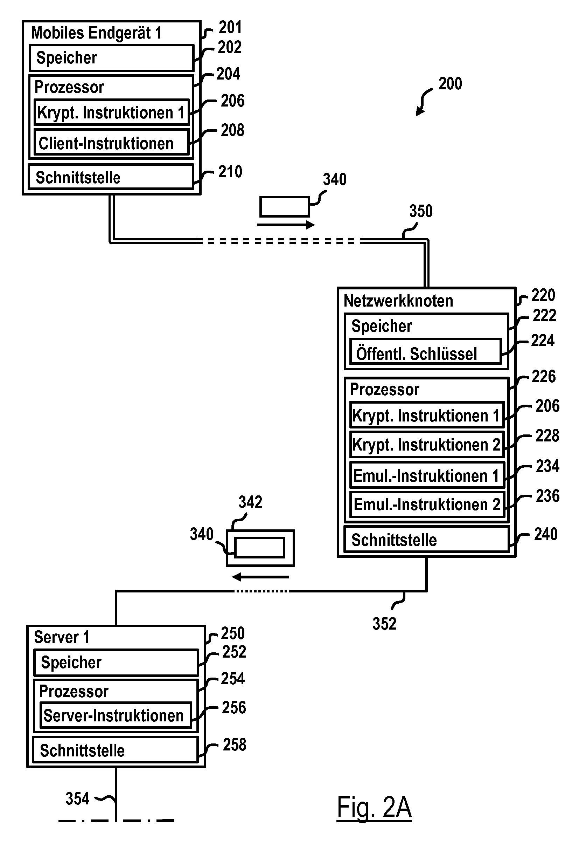

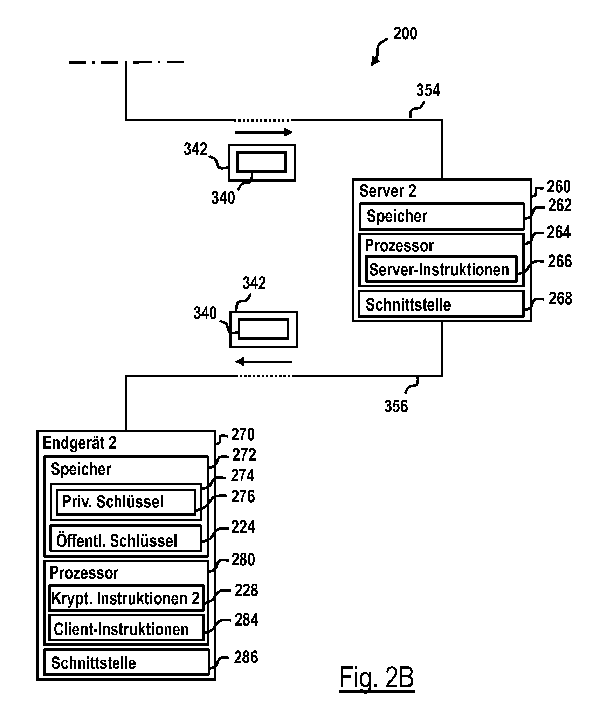

Figur 2 zeigt eine weitere Ausführungsform eines exemplarischen Netzwerks 200 zur gesicherten mobilen Nachrichtenübertragung. Zumindest ein Teil des Netzwerks 200 ist als Mobilfunknetzwerk konfiguriert. Das Netzwerk 200 ist umfasst ein erstes mobiles Endgerät 201 mit einem Speicher 202, einem Prozessor 204 und einer Kommunikationsschnittstelle 210. Bei der Kommunikationsschnittstelle 210 handelt es sich um eine Mobilfunkschnittstelle, welche zum Versenden und Empfangen von Nachrichten über das Netzwerk 200 konfiguriert. Das erste mobile Endgerät 201 ist als Nachrichten-Client konfiguriert, beispielsweise als E-Mail-Client. Hierzu führt der Prozessor 204 Client-Programminstruktionen 208 aus. Durch das Ausführen der Client-Programminstruktionen 208 durch den Prozessor 204 wird das mobile Endgerät 201 dazu veranlasst, eine Nachricht 340 zu erstellen und unter Verwendung eines dem Nachrichten-Client zugeordneten ersten Server 250 über das Netzwerk 200 an einen vorgesehenen Empfänger zu versenden. Die erstellte Nachricht wird an eine Netzwerkknoten 220 des Netzwerks 200 gesendet.

Der Netzwerkknoten 220 ist ein Mobilfunknetzwerkknoten und umfasst einen Speicher 222, einen Prozessor 226 und eine Kommunikationsschnittstelle 240. Die Kommunikationsschnittstelle 240 ist zum Versenden und Empfangen von Nachrichten über das Netzwerk 200 konfiguriert. Durch Ausführen von ersten Emulator-Programminstruktionen 234 durch den Prozessor 226 emuliert der Netzwerkknoten 220 einen ersten Nachrichten-Server 250 gegenüber dem ersten Nachrichten-Client 201. Ferner emuliert der Netzwerkknoten 220 durch Ausführen von zweiten Emulator-Programminstruktionen 234 durch den Prozessor 226 den ersten Nachrichten-Client 201 gegenüber dem ersten Nachrichten-Server 250.

Der Prozessor 204 des ersten mobilen Endgeräts 201 und der Prozessor 226 des Netzwerkknoten 220 führen jeweils erste kryptographischen Programminstruktionen 206 aus. Durch Ausführen der ersten kryptographischen Programminstruktionen 206 wird ein verschlüsselter Kommunikationskanal 350 zwischen dem ersten mobilen Endgerät 201 und dem Netzwerkknoten 220 implementiert. Hierbei handelt es sich beispielsweise um eine Ende-zu-Ende-Verschlüsselung zwischen dem ersten mobilen Endgerät 201 und dem Netzwerkknoten 220. Bei der Verschlüsselung kann es sich beispielsweise um eine symmetrische, asymmetrisch und/oder hybride Verschlüsselung handeln.

Der Netzwerkknoten 220 empfängt eine Nachricht 340 über die gesicherte Kommunikationsverbindung 350. Falls es sich um eine Ende-zu-Ende-verschlüsselte Nachricht handelt, entschlüsselt der Netzwerkknoten 220 die Nachricht zur Weiterverarbeitung und/oder zum Versenden. Im Zuge der Weiterverarbeitung prüft der Netzwerkknoten 220, ob der Inhalt der zu versendenden Nachricht verschlüsselt ist. Falls der Inhalt verschlüsselt ist, d.h. falls die von dem mobilen Endgerät 201 empfangene Nachricht eine zu der Sicherung der Kommunikationsverbindung 350 zusätzliche netzwerkknotenunabhängige Verschlüsselung aufweist, wird die Nachricht von dem Netzwerkknoten 220 nicht weiterverarbeitet, sondern in ihrer verschlüsselten Form an den ersten Server 250 weitergesendet. Falls der Inhalt der zu versendenden Nachricht unverschlüsselt ist, ermittelt der Netzwerkknoten 220 einen öffentlichen kryptographischen Schlüssel 224 des vorgesehenen Empfängers der Nachricht. Beispielsweise umfasst der Speicher 222 den öffentlichen kryptographischen Schlüssel 224 des vorgesehenen Empfängers. Durch Ausführen der zweiten kryptographischen Programminstruktionen 228 durch den Prozessor 226 wird der Netzwerkknoten 220 so gesteuert, dass er die Nachricht 340 mit dem öffentlichen kryptographischen Schlüssel 224 des vorgesehenen Empfängers verschlüsselt und die verschlüsselte Nachricht 342 an den ersten Server sendet, welcher dem Nachrichten-Client 201 zugeordnet ist.

Der erste Server 250 umfasst einen Speicher 252, einen Prozessor 254 und eine Kommunikationsschnittstelle 258. Die Kommunikationsschnittstelle 258 ist zum Versenden und Empfangen von Nachrichten über das Netzwerk 200 konfiguriert. Der Prozessor 254 führt Server-Programminstruktionen 256 aus, wodurch ein dem Nachrichten-Client 201 zugeordneter Server implementiert wird. Der Server 250 empfängt die verschlüsselte Nachricht 342 vom Netzwerkknoten 220 über die Kommunikationsverbindung 352, welche beispielsweise ungesichert ist. Der Server 250 sendet die verschlüsselte Nachricht 342 über das Netzwerk 200 weiter an einen zweiten Nachrichten-Server 260, welchem ein Nachrichten-Client 270 des vorgesehenen Empfängers zugeordnet ist. Dabei wird die verschlüsselte Nachricht 342 beispielsweise über eine ungesicherte Kommunikationsverbindung 354 gesendet. Insbesondere verlässt die Nachrichten-Client 270 bei der Übertragung von dem ersten Nachrichten-Server 250 an den Nachrichten-Server 260 den Verfügungsbereich eines ersten Dienstanbieters, welcher den ersten Nachrichten-Server 250 verwaltetet, und gelangt in einen Verfügungsbereich eines zweiten Dienstanbieters, welcher den zweiten Nachrichten-Server 260 verwaltetet.

Der zweite Nachrichten-Server 260 umfasst einen Speicher 262, einen Prozessor 264 und eine Kommunikationsschnittstelle 268. Die Kommunikationsschnittstelle 268 ist zum Versenden und Empfangen von Nachrichten über das Netzwerk 200 konfiguriert. Der Prozessor 264 führt Server-Programminstruktionen 266 aus, wodurch ein dem Nachrichten-Client 270 des Nachrichtenempfängers zugeordneter Nachrichten-Server implementiert wird. Der zweite Nachrichten-Server 260 empfängt die verschlüsselte Nachricht 342 von dem ersten Nachrichten-Server 250 über die Kommunikationsverbindung 354, welche beispielsweise ungesichert ist. Der Server 260 sendet die verschlüsselte Nachricht 342 über das Netzwerk 200 weiter an ein zweites Endgerät 270, welches als ein zweiter Nachrichten-Client konfiguriert ist. Bei dem zweiten Endgerät 270 kann es sich nach Ausführungsformen ebenso wie bei dem ersten Endgerät 201 um ein mobiles Endgerät mit einer Funkschnittstelle handeln, d.h. die Kommunikationsschnittstelle 286 ist als Funkschnittstelle konfiguriert und die Kommunikationsverbindung 366 eine kabellose Funkverbindung ist, oder um ein ortsfestes Endgerät, bei welchem die Kommunikationsverbindung 366 eine kabelgebundene Kommunikationsverbindung ist. Der zweite Nachrichten-Client 270 ist dem vorgesehenen Empfänger der verschlüsselten Nachricht 342 zugeordnet. Nach Ausführungsformen wird die verschlüsselte Nachricht 342 beispielsweise über eine ungesicherte oder eine gesicherte Kommunikationsverbindung 356 gesendet.

Das Endgerät 270 umfasst einen Speicher 272, einen Prozessor 280 und eine Kommunikationsschnittstelle 286. Die Kommunikationsschnittstelle 286 ist zum Versenden und Empfangen von Nachrichten über das Netzwerk 200 konfiguriert. Der Prozessor 280 führt Client-Programminstruktionen 284 aus, wodurch ein dem Nachrichten-Server 260 zugeordneter Nachrichten-Client des Nachrichtenempfängers implementiert wird. Ferner führt der Prozessor 280 zweite kryptographische Programminstruktionen 228 aus, wodurch die verschlüsselte Nachricht 342 mit einem dem Nachrichtenempfänger zugeordneten privaten kryptographischen Schlüssel 276 entschlüsselt wird. Der private kryptographische Schlüssel 276 ist beispielsweise in einem geschützten Speicherbereich 274 des Speichers 272 gespeichert und bildet zusammen mit dem zugehörigen öffentlichen kryptographische Schlüssel 224 ein asymmetrisches kryptographisches Schlüsselpaar.

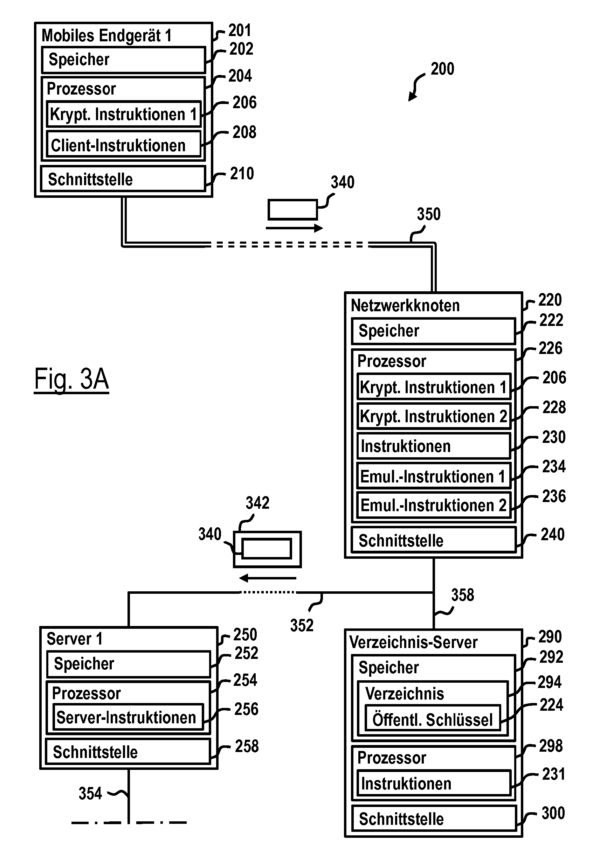

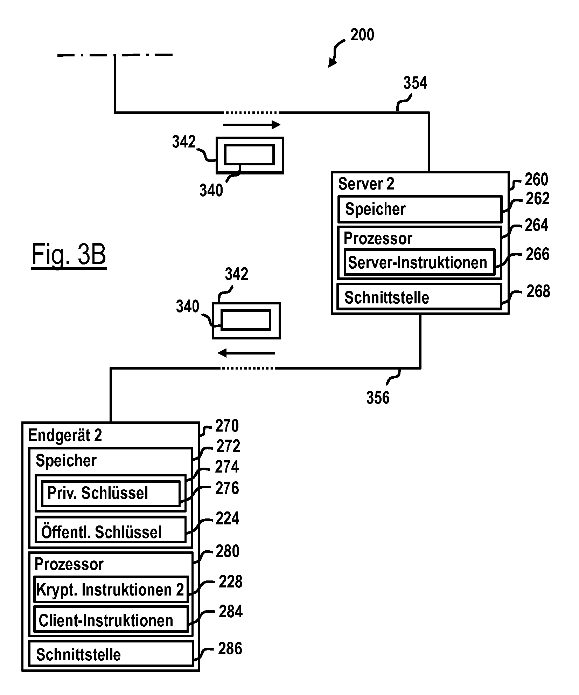

Figur 3 zeigt eine weitere Ausführungsform eines exemplarischen Netzwerks 200 zur gesicherten Nachrichtenübertragung, welches sich von dem Netzwerks 200 der Figur 2 dadurch unterscheidet, dass der Netzwerkknoten 220 keinen öffentlichen kryptographischen Schlüssel des vorgesehenen Nachrichtenempfängers gespeichert hat. Vielmehr umfasst das Netzwerks 200 der Figur 3 einen zusätzlichen Verzeichnis-Server 290, welcher den öffentlichen kryptographischen Schlüssel 224 bereitstellt. Zum Verschlüsseln der Nachricht 340 ermittelt der Netzwerkknoten 220 den öffentlichen kryptographischen Schlüssel des vorgesehenen Nachrichtenempfängers. Hierzu führt der Prozessor 226 Programminstruktionen 230 aus, welche den Netzwerkknoten 220 dazu steuern eine Anfrage nach dem öffentlichen kryptographischen Schlüssel 224 an den Verzeichnis-Server 290 zu senden.

Der Verzeichnis-Server 290 umfasst einen Speicher 292, einen Prozessor 298 und eine Kommunikationsschnittstelle 300. Die Kommunikationsschnittstelle 300 ist zum Versenden und Empfangen von Nachrichten über das Netzwerk 200 konfiguriert. In dem Speicher 292 ist ein Verzeichnis 294 mit dem öffentlichen kryptographischen Schlüssel 224 gespeichert. Der Verzeichnis-Server 290 empfängt die Anfrage nach dem öffentlichen kryptographischen Schlüssel 224 von dem Netzwerkknoten über die Kommunikationsverbindung 358. Der Prozessor 298 führt Programminstruktionen 231 aus, wodurch der Verzeichnis-Server 290 dazu veranlasst wird in Antwort auf die empfangene Anfrage das Verzeichnis 294 nach dem öffentlichen kryptographischen Schlüssel 224 zu durchsuchen und diesen an den Netzwerkknoten zurückzusenden.

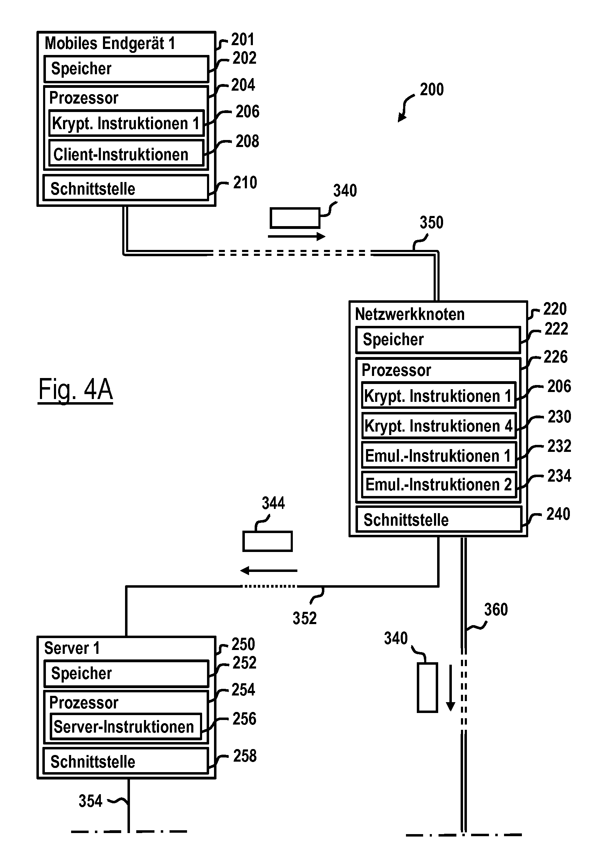

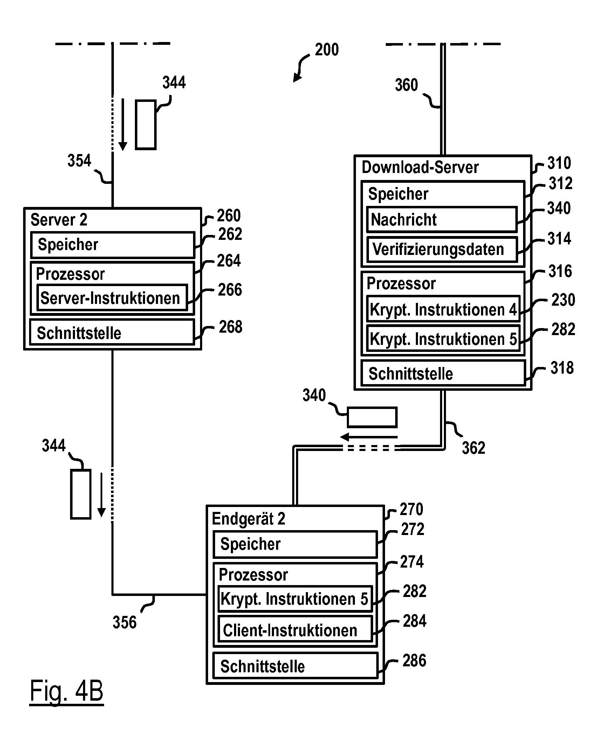

Figur 4 zeigt eine weitere Ausführungsform eines exemplarischen Netzwerks 200 zur gesicherten Nachrichtenübertragung, welches sich von dem Netzwerks 200 der Figur 2 dadurch unterscheidet, dass dem Netzwerkknoten 220 kein öffentlicher kryptographischer Schlüssel des vorgesehenen Nachrichtenempfängers zum Verschlüsseln des Inhaltes der Nachricht 340 zur Verfügung steht. Das Netzwerk 200 der Figur 4 umfasst vielmehr einen zusätzlichen Download-Server 310.

Der Download-Server 310 umfasst einen Speicher 312, einen Prozessor 316 und eine Kommunikationsschnittstelle 318. Die Kommunikationsschnittstelle 318 ist zum Versenden und Empfangen von Nachrichten über das Netzwerk 200 konfiguriert. Die Prozessoren 226 und 316 führen jeweils kryptographische Programminstruktionen 230 aus, wodurch ein verschlüsselter Kommunikationskanal 360 zwischen dem Netzwerkknoten 220 und dem Download-Server 310 implementiert wird. Der verschlüsselte Kommunikationskanal 360 stellt beispielsweise eine Ende-zu-Ende-Verschlüsselung zwischen dem Netzwerkknoten 220 und dem Download-Server 310 bereit, welche auf einem symmetrischen, asymmetrischen und/oder hybriden Verschlüsselungsverfahren basieren kann. Der Netzwerkknoten 220 sendet die Nachricht 340 über den verschlüsselten Kommunikationskanal 360 an den Download-Server 310, welcher die Nachricht 340 in dem Speicher 312 speichert und unter einem Link zum Download bzw. Abrufen über das Netzwerk 200 bereitstellt.

Der Netzwerkknoten 220 sendet eine unverschlüsselte Nachricht 344 über die beiden Nachrichten Server 250, 260 an das Endgerät 270 des Nachrichtenempfängers. Die Nachricht 344 umfasst den Download-Link der Nachricht 340.

Das Endgerät 270 sendet unter Verwendung des von der Nachricht 344 bereitgestellten Download-Links eine Download-Anfrage an den Download-Server 310. Das Endgerät authentifiziert sich ferner gegenüber dem Download-Server 310. Der Download-Server 310. Prüft die von dem Endgerät 270 empfangenen Authentifizierungsdaten durch Vergleich mit Verifikationsdaten 314, welche in dem Speicher 312 gespeichert und dem vorgesehenen Empfänger der Nachricht 340 zugeordnet sind. Bei den Authentifizierungsdaten handelt es sich beispielweise um Nutzername und Passwort des vorgesehenen Empfängers.

Auf eine erfolgreiche Authentifizierung hin führen die Prozessoren 316 und 280 jeweils kryptographische Programminstruktionen 282 aus, wodurch ein verschlüsselter Kommunikationskanal 362 zwischen dem Endgerät 270 und dem Download-Server 310 implementiert wird. Der verschlüsselte Kommunikationskanal 362 stellt beispielsweise eine Ende-zu-Ende-Verschlüsselung zwischen dem Endgerät 270 220 und dem Download-Server 310 bereit, welche auf einem symmetrischen, asymmetrischen und/oder hybriden Verschlüsselungsverfahren basieren kann. Über den verschlüsselte Kommunikationskanal 362 wird die Nachricht 340 in Antwort auf die Anfrage von dem Download-Server 310 an das Endgerät 270 gesendet.

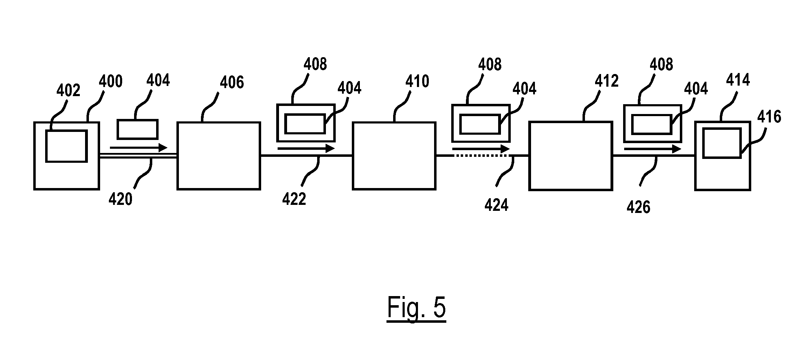

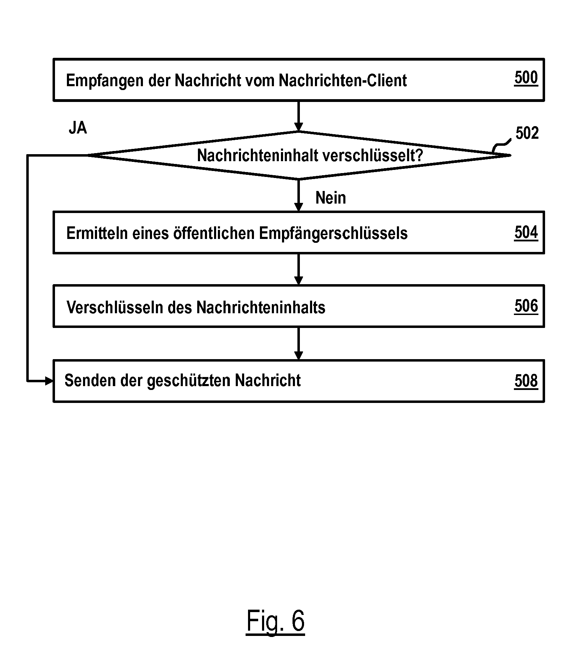

Figuren 5 und 6 zeigen eine weitere Ausführungsform eines exemplarischen Verfahrens zur gesicherten Nachrichtenübertragung. Ein mobiles Endgerät 400 eines Senders einer Nachricht 404 umfasst einen Nachrichten-Client 42. Der Nachrichten-Client 402 ist einem Nachrichten-Server 410 zugeordnet. Der Nachrichten-Client 402 erstellt die Nachricht 404, welche an einen vorgesehenen Empfänger adressiert ist, und sendet diese an einen Netzwerkknoten 406 zum Weiterleiten an den vorgesehenen Empfänger über den Nachrichten-Server 410. Zwischen dem Nachrichten-Client 402 und dem Netzwerkknoten 406 besteht beispielsweise ein verschlüsselter Kommunikationskanal 420.

Der Netzwerkknoten 406 führt das Verfahren gemäß Figur 6 aus. In Schritt 500 empfängt der Netzwerkknoten 406 die Nachricht 404 zum Versenden an den Nachrichten-Server 410. In Schritt 502 prüft der Netzwerkknoten 406, ob der Inhalt der empfangenen Nachricht 404 verschlüsselt ist. Falls der Inhalt verschlüsselt ist, wird das Verfahren in Schritt 508 fortgesetzt und die durch die bestehende Verschlüsselung geschützte Nachricht 408 über die Kommunikationsverbindung an den Nachrichten-Server 410 gesendet. Falls der Inhalt nicht verschlüsselt ist, wird das Verfahren in Schritt 504 fortgesetzt und ein öffentlicher kryptographischer Schlüssel des vorgesehenen Empfängers der Nachricht ermittelt. Den entsprechenden öffentlichen kryptographischen Schlüssel umfasst beispielsweise der Netzwerkknoten 406 oder der Netzwerkknoten 406 fragt den öffentlichen kryptographischen Schlüssel von einem Verzeichnis-Server oder dem vorgesehenen Empfänger der Nachricht ab. Hierzu sendet der Netzwerkknoten 406 eine entsprechende Anfrage den Verzeichnis-Server oder den vorgesehenen Empfänger der Nachricht. In Schritt 506 wird der Inhalt der Nachricht 404 mit dem öffentlichen kryptographischen Schlüssel des Empfängers verschlüsselt und die so geschützte Nachricht 408 in Schritt 508 über die Kommunikationsverbindung 422 an den Nachrichten-Server 410 gesendet.

Der Nachrichten-Server 410 versendet die verschlüsselte Nachricht 408 über eine Kommunikationsverbindung 424 an einen Nachrichten-Server 412, welcher einem Nachrichten-Client 416 des vorgesehenen Empfängers der Nachricht zugeordnet ist. Der Nachrichten-Server 412 des Empfängers leitet die verschlüsselte Nachricht schließlich an den Nachrichten-Client 416 des Empfängers über eine Kommunikationsverbindung weiter. Der Nachrichten-Client 416 wird beispielsweise von einem Endgerät 414 des Empfängers bereitgestellt. Bei dem Endgerät 414 kann es sich nach Ausführungsformen um ein mobiles Endgerät, insbesondere ein Mobilfunkgerät, oder ein ortsfestes Endgerät zur kabelgebundenen Kommunikation handeln. Das Endgerät 414 des Empfängers umfasst einen dem öffentlichen kryptographischen Schlüssel des Empfängers zugeordneten privaten kryptographischen Schlüssel, mit welchem die verschlüsselte Nachricht 408 entschlüsselt wir, sodass der Inhalt er Nachricht für den Empfänger zugänglich wird.

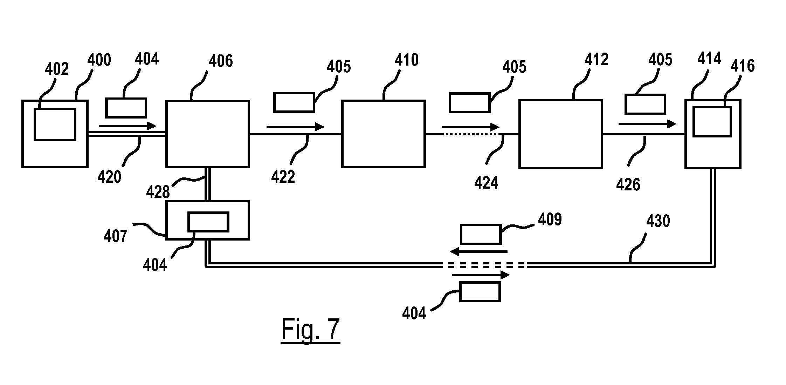

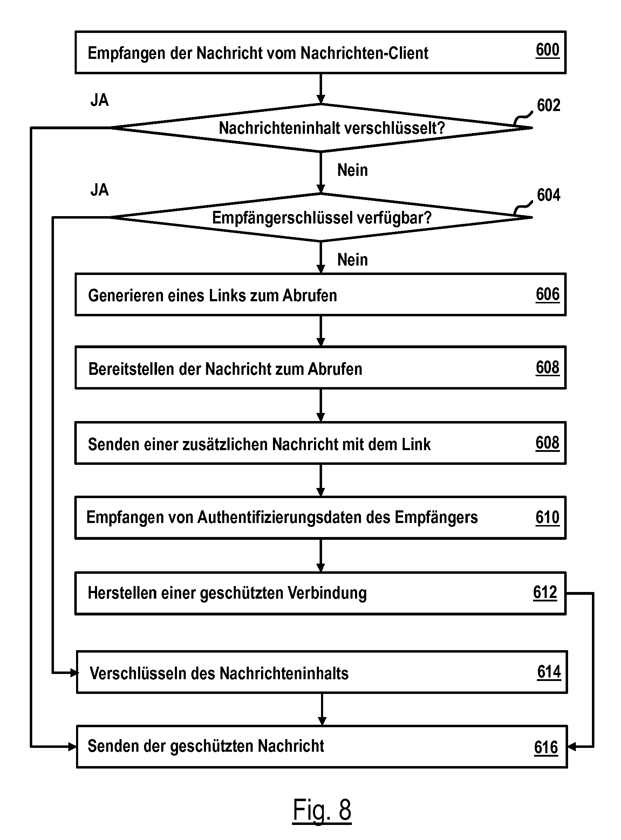

Figuren 7 und 8 zeigen eine weitere Ausführungsform eines exemplarischen Verfahrens zur gesicherten Nachrichtenübertragung. Die Ausführungsform gemäß den Figuren 7 und 8 unterscheidet sich von der Ausführungsform der Figuren 5 und 6 dadurch, dass dem Netzwerkknoten 406 kein öffentlicher kryptographischer Schlüssel zum Verschlüsseln der Nachricht 404 zur Verfügung steht.

Der Netzwerkknoten 406 und ein zusätzlicher Download-Server 407 führen dabei das Verfahren gemäß Figur 7 aus. In Schritt 600 empfängt der Netzwerkknoten 406 die Nachricht 404 zum Versenden an den Nachrichten-Server 410. In Schritt 602 prüft der Netzwerkknoten 406, ob der Inhalt der empfangenen Nachricht 404 verschlüsselt ist. Falls der Inhalt verschlüsselt ist, wird das Verfahren in Schritt 618 fortgesetzt und die durch die bestehende Verschlüsselung geschützte Nachricht 408 über die Kommunikationsverbindung an den Nachrichten-Server 410 gesendet. Falls der Inhalt nicht verschlüsselt ist, wird das Verfahren in Schritt 604 fortgesetzt.

In Schritt 604 wird geprüft, ob ein öffentlicher kryptographischer Schlüssel des vorgesehenen Empfängers verfügbar ist. Falls ein öffentlicher kryptographischer Schlüssel des vorgesehenen Empfängers verfügbar ist, wird das Verfahren in Schritt 616 fortgesetzt. In Schritt 616 wird der Inhalt der Nachricht 404 mit dem öffentlichen kryptographischen Schlüssel des Empfängers verschlüsselt und die so geschützte Nachricht 408 in Schritt 618 über die Kommunikationsverbindung 422 an den Nachrichten-Server 410 gesendet.

Falls ein öffentlicher kryptographischer Schlüssel des vorgesehenen Empfängers nicht verfügbar ist, wird das Verfahren in Schritt 606 fortgesetzt. In Schritt 606 wird ein Link zum Abrufen der Nachricht von dem Download-Server 407 generiert und die Nachricht 404 in Schritt 608 zum Abruf unter dem Link bereitgestellt. Hierzu wird ein verschlüsselter Kommunikationskanal zwischen dem Netzwerkknoten 406 und dem Download-Server 407 implementiert, über welchen die Nachricht 404 an den Download-Server 407 gesendet wird. Der Download-Server 407 stellt die Nachricht 404 unter dem generierten Link zum Abruf, d.h. Download bereit. In Schritt 610 wird eine zusätzliche Nachricht 405 mit dem Download-Link erstellt und über die Nachrichten-Server 410, 412 an den Nachrichten-Client 416 des Endgeräts 414 gesendet. Der vorgesehene Empfänger der Nachricht 404 wird dadurch in die Lage versetzt, die Nachricht 404 von dem Download-Server 407 unter Verwendung des bereitgestellten Download-Links abzurufen. Hierbei empfängt der Download-Server 407 in Schritt 612 Authentifizierungsdaten des Empfängers. Falls diese Authentifizierungsdaten gültig sind, wird in Schritt 614 ein geschützter, insbesondere eine Ende-zu-End-verschlüsselter, Kommunikationskanal 430 zwischen Download-Server 407 und Empfängerendgerät 414 hergestellt. In Antwort auf den Empfang einer Anfrage 409 des Empfängerendgerät 414 wird in Schritt 618 die geschützte Nachricht 404 an das Empfängerendgerät 414 gesendet, wobei die Nachricht 404 durch die Ende-zu-End-Verschlüsselung des Kommunikationskanals 430 geschützt ist.

### Bezugszeichenliste

- 100: Netzwerk
- 102: Mobilfunkgerät
- 104: Mobilfunkgerät
- 112: verschlüsselte Kommunikationsverbindung
- 120: Netzwerkknoten
- 121: Vermittlungsstelle
- 122: Vermittlungsstelle
- 130: Nachrichten-Server
- 132: Nachrichten-Gateway
- 140: Nachrichten-Server
- 142: Nachrichten-Gateway
- 144: Vermittlungsstelle
- 150: Netzwerkserver
- 152: Netzwerkserver
- 154: Netzwerkserver
- 156: Netzwerkserver
- 158: Netzwerkserver
- 200: Netzwerk
- 201: Mobilfunkgerät
- 202: Speicher
- 204: Prozessor
- 206: kryptographische Programminstruktionen
- 208: Client-Programminstruktionen
- 210: Kommunikationsschnittstelle
- 220: Netzwerkknoten
- 222: Speicher
- 224: öffentlicher kryptographischer Schlüssel
- 226: Prozessor
- 228: kryptographische Programminstruktionen
- 230: Programminstruktionen
- 231: Programminstruktionen
- 234: Emulator-Programminstruktionen
- 236: Emulator-Programminstruktionen
- 240: Kommunikationsschnittstelle
- 250: Nachrichten-Server
- 252: Speicher
- 254: Prozessor
- 256: Server-Programminstruktionen
- 258: Kommunikationsschnittstelle
- 260: Nachrichten-Server
- 262: Speicher
- 264: Prozessor
- 266: Server-Programminstruktionen
- 268: Kommunikationsschnittstelle
- 270: Endgerät
- 272: Speicher
- 274: geschützter Speicherbereich
- 276: privater kryptographischer Schlüssel
- 280: Prozessor
- 282: kryptographische Programminstruktionen
- 284: Client-Programminstruktionen
- 286: Kommunikationsschnittstelle
- 290: Verzeichnis-Server
- 292: Speicher
- 294: Verzeichnis
- 298: Prozessor
- 300: Kommunikationsschnittstelle
- 310: Download-Server
- 312: Speicher
- 314: Verifizierungsdaten
- 316: Prozessor
- 318: Kommunikationsschnittstelle
- 340: Nachricht
- 342: verschlüsselte Nachricht
- 344: Nachricht
- 350: verschlüsselter Kommunikationsverbindung
- 352: Kommunikationsverbindung
- 354: Kommunikationsverbindung
- 356: Kommunikationsverbindung
- 358: Kommunikationsverbindung
- 360: Kommunikationsverbindung
- 362: verschlüsselte Kommunikationsverbindung
- 400: Mobilfunkgerät
- 402: Nachrichten-Client
- 404: Nachricht
- 405: Nachricht
- 406: Netzwerkknoten
- 407: Download-Server
- 408: verschlüsselte Nachricht
- 409: Anfrage
- 410: Nachrichten-Server
- 412: Nachrichten-Server
- 414: Endgerät
- 416: Nachrichten-Client
- 420: verschlüsselte Kommunikationsverbindung
- 422: Kommunikationsverbindung
- 424: Kommunikationsverbindung
- 426: Kommunikationsverbindung
- 428: verschlüsselte Kommunikationsverbindung
- 430: verschlüsselte Kommunikationsverbindung

## Patentansprüche

1. Telekommunikationsverfahren zum geschützten Übertragen einer Nachricht (340, 404) von einem Nachrichten-Client (402) eines Mobilfunkgeräts (102, 104, 201, 400), wobei dem Nachrichten-Client (402) ein Nachrichten-Server (130, 250, 410) zugeordnet ist, der ein Protokoll (208) zur Entgegennahme der Nachricht von dem Nachrichten-Client (402) und zum Senden der Nachricht (340, 404) an einen weiteren Nachrichten-Server (140, 260, 412) implementiert, welchem der in der Nachricht (340, 404) angegebenen Nachrichten-Empfänger zugeordnet ist, wobei die Übertragung der Nachricht (340, 404) von dem Nachrichten-Client (402) an den Nachrichten-Server (130, 250, 410) über einen Netzwerkknoten (120, 122, 132, 220, 406) erfolgt, wobei der Netzwerkknoten (120, 122, 132, 220, 406) den Nachrichten-Server (130, 250, 410) gegenüber dem Nachrichten-Client (402) emuliert und wobei der Netzwerkknoten (120, 122, 132, 220, 406) den Nachrichten-Client (402) gegenüber dem Nachrichten-Server (130, 250, 410) emuliert, mit folgenden Schritten:
a) Empfangen der Nachricht (340, 404) von dem Nachrichten-Client (402) durch den Netzwerkknoten (120, 122, 132, 220, 406),
b) Prüfen durch den Netzwerkknoten (120, 122, 132, 220, 406), ob der zu übertragende Inhalt der Nachricht (340, 404) verschlüsselt ist, und,
c) wenn dies der Fall ist, Senden der Nachricht (340, 404) von dem Netzwercknoten (120, 122, 132, 220, 406) über den Nachrichten-Server (130, 250, 410) an den in der Nachricht (340, 404) angegebenen Nachrichten-Empfänger, und,
d) wenn dies nicht der Fall ist, Schützen der Nachricht (340, 404) durch den Netzwerkknoten (120, 122, 132, 220, 406) und Senden der geschützten Nachricht (342, 408) an den Nachrichten-Empfänger,
wobei es sich bei dem Netzwerkknoten (120, 122, 132, 220, 406) um einen Knoten eines Mobilfunknetzes handelt.

2. Telekommunikationsverfahren nach Anspruch 1, wobei es sich bei Nachricht (340, 404) um eine E-Mail, bei dem Nachrichten-Client (402) um einen E-Mail-Client und bei dem Nachrichten-Server (130, 250, 410) um einen E-Mail-Server handelt.

3. Telekommunikationsverfahren nach Anspruch 1, wobei es sich bei Nachricht (340, 404) um eine Instant Message, bei dem Nachrichten-Client (402) um einen Instant-Messaging-Client und bei dem Nachrichten-Server (130, 250, 410) um einen Instant-Messaging-Server handelt.

4. Telekommunikationsverfahren nach einem der vorhergehenden Ansprüche, wobei es sich bei dem Netzwerkknoten (120, 122, 132, 220, 406) um einen der folgenden Knoten handelt:
Basisstation, BTS-Knoten, BSC-Knoten, Node-B, STP-Knoten, MSC-Knoten, SMSC-Knoten, PCU-Knoten, SGS-Knoten, GGS-Knoten, RNC-Knoten, CBC-Knoten, Mobilfunkrouter, SGW-Knoten, PGW-Knoten, MME-Knoten.

5. Telekommunikationsverfahren nach einem der vorhergehenden Ansprüche, wobei die Übertragung der Nachricht (340, 404) von dem Nachrichten-Client (402) an den Netzwerkknoten (120, 122, 132, 220, 406) mittels eines Transport-Layer-Security-Protokolls (206) erfolgt.

6. Telekommunikationsverfahren nach einem der vorhergehenden Ansprüche, wobei der unverschlüsselte Nachrichtinhalt zum Schutz durch den Netzwerkknoten (120, 122, 132, 220, 406) verschlüsselt wird, wobei es sich bei der geschützten Nachricht um die durch den Netzwerkknoten (120, 122, 132, 220, 406) verschlüsselte Nachricht (342, 408) handelt und die durch den Netzwerkknoten (120, 122, 132, 220, 406) verschlüsselte Nachricht (342, 408) über den Nachrichten-Server (130, 250, 410) an Nachrichten-Empfänger gesendet wird.

7. Telekommunikationsverfahren nach Anspruch 6, wobei die Verschlüsselung der Nachricht (340, 404) mit Hilfe eines öffentlichen Schlüssels (224) des in der Nachricht (340, 404) angegebenen Nachrichten-Empfängers erfolgt.

8. Telekommunikationsverfahren nach Anspruch 7, wobei der Netzwerkknoten (120, 122, 132, 220, 406) einen Speicher (222) umfasst, in welchem der öffentliche Schlüssel (224) des Nachrichten-Empfängers gespeichert ist, oder
wobei der Netzwerkknoten (120, 122, 132, 220, 406) den öffentlichen Schlüssel (224) mithilfe des in der Nachricht (340, 404) angegebenen Nachricht-Empfängers von einem Verzeichnis-Server (122, 290) abfragt.

9. Telekommunikationsverfahren nach Anspruch 1 bis 5, wobei das Schützen der Nachricht (340, 404) ein Generieren eines Links durch den Netzwerkknoten (120, 122, 132, 220, 406) umfasst, über welchen der Inhalt der Nachricht (340, 404) durch den Nachrichten-Empfänger abrufbar ist, wobei eine weitere Nachricht (344, 405), die den Link beinhaltet, von dem Netzwerkknoten (120, 122, 132, 220, 406) generierter und über den Nachrichten-Server (130, 250, 410) an den Empfänger der geschützten Nachricht gesendet wird, wobei das Senden der geschützten Nachricht in Form eines Abrufens des Inhalts der Nachricht (340, 404) durch den Nachrichten-Empfänger über den Link erfolgt.

10. Telekommunikationsverfahren nach Anspruch 9, wobei das erfolgreiche Abrufen der Inhalte der Nachricht (340, 404) eine erfolgreiche Authentifizierung des abrufenden Nachrichten-Empfängers durch einen Server (310, 407), welcher den Inhalt der Nachricht (340, 404) unter dem Link zum Abruf bereitstellt, voraussetzt.

11. Telekommunikationsverfahren nach einem der Ansprüche 9 oder 10, wobei das Abrufen des Inhalts der Nachricht (340, 404) über einen Ende-zu-Ende-verschlüsselten Übertragungskanal (362, 430) zwischen dem Server (310, 407), welcher den Inhalt der Nachricht (340, 404) unter dem Link zum Abruf bereitstellt, und einem Computersystem (270, 414) des Nachrichten-Empfängers erfolgt.

12. Telekommunikationsverfahren nach einem der Ansprüche 9 bis 11, wobei es sich bei dem Server (310, 407), welcher den Inhalt der Nachricht (340, 404) unter dem Link zum Abruf bereitstellt, um den Netzwerkknoten (120, 122, 132, 220, 406) handelt.

13. Telekommunikationsverfahren nach einem der Ansprüche 9 bis 11, wobei es sich bei dem Server (310, 407), welcher den Inhalt der Nachricht (340, 404) unter dem Link zum Abruf bereitstellt, um einen Download-Server (310, 407) eines Dienstanbieters handelt, an welchen der Netzwerkknoten (120, 122, 132, 220, 406) den Inhalt der Nachricht (340, 404) in verschlüsselter Form zum Abrufen senden.

14. Netzwerkknoten (120, 122, 132, 220, 406) zum geschützten Übertragen einer Nachricht (340, 404) on einem Nachrichten-Client (402) eines Mobilfunkgeräts, wobei der Netzwerkknoten (120, 122, 132, 220, 406) einen Prozessor (226), einen Speicher (222) mit Programminstruktionen (228, 234, 236) und eine Netzwerkschnittstelle (240) umfasst,
wobei ein Ausführen der Programminstruktionen (228, 234, 236) durch den Prozessor (226) den Netzwerkknoten (120, 122, 132, 220, 406) dazu veranlasst einen Nachrichten-Server (130, 250, 410) gegenüber dem Nachrichten-Client (402) zu emulieren und den Nachrichten-Client (402) gegenüber dem Nachrichten-Server (130, 250, 410) zu emulieren,
wobei der Nachrichten-Client (402) dem Nachrichten-Server (130, 250, 410) zugeordnet ist, der ein Protokoll (208) zur Entgegennahme der Nachricht (340, 404) von dem Nachrichten-Client (402) und zum Senden der Nachricht (340, 404) an einen weiteren Nachrichten-Server (140, 260, 412) implementiert, welchem der in der Nachricht (340, 404) angegebenen Nachrichten-Empfänger zugeordnet ist,
wobei ein Ausführen der Programminstruktionen (228, 234, 236) durch den Prozessor (226) den Netzwerkknoten (120, 122, 132, 220, 406) ferner veranlasst zum:
a) Empfangen der Nachricht (340, 404) von dem Nachrichten-Client (402),
b) Prüfen, ob der zu übertragende Inhalt der Nachricht (340, 404) verschlüsselt ist, und,
c) wenn dies der Fall ist, Senden der Nachricht (340, 404) über den Nachrichten-Server (130, 250, 410) an den in der Nachricht angegebenen Nachrichten-Empfänger, und,
d) wenn dies nicht der Fall ist, Schützen der Nachricht (340, 404) durch den Netzwerkknoten (120, 122, 132, 220, 406) und Senden der geschützten Nachricht (342, 408) an den Nachrichten-Empfänger,
wobei es sich bei dem Netzwerkknoten (120, 122, 132, 220, 406) um einen Knoten eines Mobilfunknetzes handelt.

15. Netzwerkknoten (120, 122, 132, 220, 406) nach Anspruch 14, wobei es sich bei dem Netzwerkknoten (120, 122, 132, 220, 406) um einen der folgenden Knoten handelt:
Basisstation, BTS-Knoten, BSC-Knoten, Node-B, STP-Knoten, MSC-Knoten, SMSC-Knoten, PCU-Knoten, SGS-Knoten, GGS-Knoten, RNC-Knoten, CBC-Knoten, Mobilfunkrouter, SGW-Knoten, PGW-Knoten, MME-Knoten.

## Claims

1. A telecommunication method for the protected transmission of a message (340, 404) from a message client (402) of a mobile radio device (102, 104, 201, 400), wherein a message server (130, 250, 410) is assigned to the message client (402) and implements a protocol (208) for receiving the message from the message client (402) and for sending the message (340, 404) to a further message server (140, 260, 412), to which the message recipient specified in the message (340, 404) is assigned, wherein the message (340, 404) is transmitted from the message client (402) to the message server (130, 250, 410) via a network node (120, 122, 132, 220, 406), wherein the network node (120, 122, 132, 220, 406) emulates the message server (130, 250, 410) with respect to the message client (402), and wherein the network node (120, 122, 132, 220, 406) emulates the message client (402) with respect to the message server (130, 250, 410), said method comprising the following steps:
a) receiving the message (340, 404) from the message client (402) by the network node (120, 122, 132, 220, 406),
b) checking by the network node (120, 122, 132, 220, 406) whether the content of the message (340, 404) to be transmitted is encrypted, and,
c) if this is the case, sending the message (340, 404) from the network node (120, 122, 132, 220, 406) via the message server (130, 250, 410) to the message recipient specified in the message (340, 404), and,
d) if this is not the case, protecting the message (340, 404) by the network node (120, 122, 132, 220, 406) and sending the protected message (342, 408) to the message recipient,
wherein the network node (120, 122, 132, 220, 406) is a node of a mobile radio network.

2. The telecommunication method according to claim 1, wherein the message (340, 404) is an e-mail, the message client (402) is an e-mail client and the message server (130, 250, 410) is an e-mail server.

3. The telecommunication method according to claim 1, wherein the message (340, 404) is an instant message, the message client (402) is an instant messaging client and the message server (130, 250, 410) is an instant messaging server.

4. The telecommunication method according to any one of the preceding claims, wherein the network node (120, 122, 132, 220, 406) is one of the following nodes:
base station, BTS node, BSC node, node-B, STP node, MSC node, SMSC node, PCU node, SGS node, GGS node, RNC node, CBC node, mobile router, SGW node, PGW node, MME node.

5. The telecommunication method according to any one of the preceding claims, wherein the message (340, 404) is transmitted from the message client (402) to the network node (120, 122, 132, 220, 406) by means of a transport layer security protocol (206).

6. The telecommunication method according to any one of the preceding claims, wherein the unencrypted message content is encrypted for protection by the network node (120, 122, 132, 220, 406), wherein the protected message is the message (342, 408) encrypted by the network node (120, 122, 132, 220, 406) and the message (342, 408) encrypted by the network node (120, 122, 132, 220, 406) is sent to message recipients via the message server (130, 250, 410).

7. The telecommunication method according to claim 6, wherein the message (340, 404) is encrypted using a public key (224) of the message recipient indicated in the message (340, 404).

8. The telecommunication method according to claim 7, wherein the network node (120, 122, 132, 220, 406) comprises a memory (222) in which the public key (224) of the message recipient is stored, or
wherein the network node (120, 122, 132, 220, 406) retrieves the public key (224) from a directory server (122, 290) using the message recipient specified in the message (340, 404).

9. The telecommunications method according to any one of claims 1 to 5, wherein protecting the message (340, 404) comprises generating a link by the network node (120, 122, 132, 220, 406) via which the content of the message (340, 404) can be retrieved by the message recipient, wherein a further message (344, 405) containing the link is generated by the network node (120, 122, 132, 220, 406) and sent via the message server (130, 250, 410) to the recipient of the protected message, wherein the protected message is sent in the form of a retrieval of the content of the message (340, 404) by the message recipient via the link.

10. The telecommunication method according to claim 9, wherein the successful retrieval of the contents of the message (340, 404) requires a successful authentication of the retrieving message recipient by a server (310, 407) providing the content of the message (340, 404) under the link for retrieval.

11. The telecommunication method according to any one of claims 9 or 10, wherein the content of the message (340, 404) is retrieved via an end-to-end encrypted transmission channel (362, 430) between the server (310, 407) providing the content of the message (340, 404) under the link for retrieval and a computer system (270, 414) of the message recipient.

12. The telecommunication method according to any one of claims 9 to 11, wherein the server (310, 407) providing the content of the message (340, 404) under the link for retrieval is the network node (120, 122, 132, 220, 406).

13. The telecommunication method according to any one of claims 9 to 11, wherein the server (310, 407) providing the content of the message (340, 404) under the link for retrieval is a download server (310, 407) of a service provider to which the network node (120, 122, 132, 220, 406) sends the content of the message (340, 404) in encrypted form for retrieval.

14. A network node (120, 122, 132, 220, 406) for the protected transmission of a message (340, 404) to a message client (402) of a mobile radio device, wherein the network node (120, 122, 132, 220, 406) comprises a processor (226), a memory (222) with program instructions (228, 234, 236) and a network interface (240),
wherein execution of the program instructions (228, 234, 236) by the processor (226) causes the network node (120, 122, 132, 220, 406) to emulate a message server (130, 250, 410) with respect to the message client (402) and to emulate the message client (402) with respect to the message server (130, 250, 410),
wherein the message client (402) is assigned to the message server (130, 250, 410) which implements a protocol (208) for receiving the message (340, 404) from the message client (402) and for sending the message (340, 404) to a further message server (140, 260, 412) to which the message recipient specified in the message (340, 404) is assigned,
wherein execution of the program instructions (228, 234, 236) by the processor (226) further causes the network node (120, 122, 132, 220, 406) to:
a) receive the message (340, 404) from the message client (402),
b) check whether the content of the message (340, 404) to be transmitted is encrypted, and,
c) if this is the case, send the message (340, 404) via the message server (130, 250, 410) to the message recipient specified in the message, and,
d) if this is not the case, protect the message (340, 404) by the network node (120, 122, 132, 220, 406) and send the protected message (342, 408) to the message recipient,
wherein the network node (120, 122, 132, 220, 406) is a node of a mobile radio network.

15. The network node (120, 122, 132, 220, 406) according to claim 14, wherein the network node (120, 122, 132, 220, 406) is one of the following nodes:
base station, BTS node, BSC node, node-B, STP node, MSC node, SMSC node, PCU node, SGS node, GGS node, RNC node, CBC node, mobile router, SGW node, PGW node, MME node.

## Revendications

1. Procédé de télécommunications pour la transmission protégée d'un message (340, 404) depuis un client de message (402) d'un dispositif radio mobile (102, 104, 201, 400), dans lequel un serveur de message (130, 250, 410) est attribué au client de message (402) et met en place un protocole (208) pour recevoir le message depuis le client de message (402) et pour envoyer le message (340, 404) à un serveur de message (140, 260, 412) supplémentaire, auquel le destinataire du message spécifié dans le message (340, 404) est attribué, dans lequel le message (340, 404) est transmis depuis le client de message (402) au serveur de message (130, 250, 410) par l'intermédiaire d'un noeud de réseau (120, 122, 132, 220, 406), dans lequel le noeud de réseau (120, 122, 132, 220, 406) émule le serveur de message (130, 250, 410) par rapport au client de message (402), et dans lequel le noeud de réseau (120, 122, 132, 220, 406) émule le client de message (402) par rapport au serveur de message (130, 250, 410), ledit procédé comprenant les étapes suivantes consistant à :
a) faire recevoir le message (340, 404) depuis le client de message (402) par le noeud de réseau (120, 122, 132, 220, 406),
b) faire contrôler par le noeud de réseau (120, 122, 132, 220, 406) si le contenu du message (340, 404) à transmettre est chiffré, et,
c) si c'est le cas, envoyer le message (340, 404) depuis le noeud de réseau (120, 122, 132, 220, 406) par l'intermédiaire du serveur de message (130, 250, 410) au destinataire du message spécifié dans le message (340, 404), et,
d) si ce n'est pas le cas, faire protéger le message (340, 404) par le noeud de réseau (120, 122, 132, 220, 406) et envoyer le message protégé (342, 408) au destinataire du message,
dans lequel le noeud de réseau (120, 122, 132, 220, 406) est un noeud d'un réseau radio mobile.

2. Procédé de télécommunications selon la revendication 1, dans lequel le message (340, 404) est un courrier électronique, le client de message (402) est un client de courrier électronique et le serveur de message (130, 250, 410) est un serveur de courrier électronique.

3. Procédé de télécommunications selon la revendication 1, dans lequel le message (340, 404) est un message instantané, le client de message (402) est un client de messagerie instantanée et le serveur de message (130, 250, 410) est un serveur de messagerie instantanée.

4. Procédé de télécommunications selon l'une quelconque des revendications précédentes, dans lequel le noeud de réseau (120, 122, 132, 220, 406) est l'un des noeuds suivants :
station de base, noeud BTS, noeud BSC, nœud-B, noeud STP, noeud MSC, noeud SMSC, noeud PCU, noeud SGS, noeud GGS, noeud RNC, noeud CBC, routeur mobile, noeud SGW, noeud PGW, noeud MME.

5. Procédé de télécommunications selon l'une quelconque des revendications précédentes, dans lequel le message (340, 404) est transmis depuis le client de message (402) au noeud de réseau (120, 122, 132, 220, 406) au moyen d'un protocole de sécurité de couche de transport (206).

6. Procédé de télécommunications selon l'une quelconque des revendications précédentes, dans lequel le contenu du message non chiffré est chiffré pour protection par le noeud de réseau (120, 122, 132, 220, 406), dans lequel le message protégé est le message (342, 408) chiffré par le noeud de réseau (120, 122, 132, 220, 406) et le message (342, 408) chiffré par le noeud de réseau (120, 122, 132, 220, 406) est envoyé aux destinataires du message par l'intermédiaire du serveur de message (130, 250, 410).

7. Procédé de télécommunications selon la revendication 6, dans lequel le message (340, 404) est chiffré en utilisant une clé publique (224) du destinataire du message indiquée dans le message (340, 404).

8. Procédé de télécommunications selon la revendication 7, dans lequel le noeud de réseau (120, 122, 132, 220, 406) comprend une mémoire (222) dans laquelle la clé publique (224) du destinataire du message est stockée, ou
dans lequel le noeud de réseau (120, 122, 132, 220, 406) récupère la clé publique (224) depuis un serveur de répertoire (122, 290) en utilisant le destinataire du message spécifié dans le message (340, 404).

9. Procédé de télécommunications selon l'une quelconque des revendications 1 à 5, dans lequel l'étape consistant à protéger le message (340, 404) comprend une étape consistant à faire générer un lien par le noeud de réseau (120, 122, 132, 220, 406) par l'intermédiaire duquel le contenu du message (340, 404) peut être récupéré par le destinataire du message, dans lequel un message (344, 405) supplémentaire contenant le lien est généré par le noeud de réseau (120, 122, 132, 220, 406) et envoyé par l'intermédiaire du serveur de message (130, 250, 410) au destinataire du message protégé, dans lequel le message protégé est envoyé sous la forme d'une récupération du contenu du message (340, 404) par le destinataire du message par l'intermédiaire du lien.

10. Procédé de télécommunications selon la revendication 9, dans lequel la récupération réussie du contenu du message (340, 404) exige une authentification réussie du destinataire du message de récupération par un serveur (310, 407) fournissant le contenu du message (340, 404) sous le lien de récupération.

11. Procédé de télécommunications selon l'une quelconque des revendications 9 ou 10, dans lequel le contenu du message (340, 404) est récupéré par l'intermédiaire d'un canal de transmission chiffrée de bout en bout (362, 430) entre le serveur (310, 407) fournissant le contenu du message (340, 404) sous le lien de récupération et un système informatique (270, 414) du destinataire du message.

12. Procédé de télécommunications selon l'une quelconque des revendications 9 à 11, dans lequel le serveur (310, 407) fournissant le contenu du message (340, 404) sous le lien de récupération est le noeud de réseau (120, 122, 132, 220, 406).

13. Procédé de télécommunications selon l'une quelconque des revendications 9 à 11, dans lequel le serveur (310, 407) fournissant le contenu du message (340, 404) sous le lien de récupération est un serveur de téléchargement (310, 407) d'un fournisseur de services auquel le noeud de réseau (120, 122, 132, 220, 406) envoie le contenu du message (340, 404) sous forme chiffrée pour récupération.

14. Noeud de réseau (120, 122, 132, 220, 406) pour la transmission protégée d'un message (340, 404) à un client de message (402) d'un dispositif radio mobile, dans lequel le noeud de réseau (120, 122, 132, 220, 406) comprend un processeur (226), une mémoire (222) avec des instructions de programme (228, 234, 236) et une interface réseau (240),
dans lequel l'exécution des instructions de programme (228, 234, 236) par le processeur (226) amène le noeud de réseau (120, 122, 132, 220, 406) à émuler un serveur de message (130, 250, 410) par rapport au client de message (402) et à émuler le client de message (402) par rapport au serveur de message (130, 250, 410),
dans lequel le client de message (402) est attribué au serveur de message (130, 250, 410) qui met en place un protocole (208) pour recevoir le message (340, 404) depuis le client de message (402) et pour envoyer le message (340, 404) à un serveur de message (140, 260, 412) supplémentaire auquel le destinataire du message spécifié dans le message (340, 404) est attribué,
dans lequel l'exécution des instructions de programme (228, 234, 236) par le processeur (226) amène en outre le noeud de réseau (120, 122, 132, 220, 406) à :
a) recevoir le message (340, 404) depuis le client de message (402),
b) faire contrôler si le contenu du message (340, 404) à transmettre est chiffré, et,
c) si c'est le cas, envoyer le message (340, 404) par l'intermédiaire du serveur de message (130, 250, 410) au destinataire de message spécifié dans le message, et,
d) si ce n'est pas le cas, faire protéger le message (340, 404) par le noeud de réseau (120, 122, 132, 220, 406) et envoyer le message protégé (342, 408) au destinataire du message,
dans lequel le noeud de réseau (120, 122, 132, 220, 406) est un noeud d'un réseau radio mobile.

15. Noeud de réseau (120, 122, 132, 220, 406) selon la revendication 14, dans lequel le noeud de réseau (120, 122, 132, 220, 406) est l'un des noeuds suivants :
station de base, noeud BTS, noeud BSC, nœud-B, noeud STP, noeud MSC, noeud SMSC, noeud PCU, noeud SGS, noeud GGS, noeud RNC, noeud CBC, routeur mobile, noeud SGW, noeud PGW, noeud MME.
